(19) Europäisches Patentamt
European Patent Office
Office européen des brevets

(11) **EP 2 204 771 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(51) Int Cl.:
***G06T 7/00*** *(2006.01)*

(21) Anmeldenummer: **09180893.1**

(22) Anmeldetag: **29.12.2009**

(54) **Verfahren und Vorrichtung zum Ermitteln einer Änderung des Nickwinkels einer Kamera eines Fahrzeugs**

Method and device for determining a change in the inclination of a camera of a vehicle

Procédé et dispositif de détermination de la modification de l'angle de tangage d'une caméra d'un véhicule

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.12.2008 DE 102008063328**

(43) Veröffentlichungstag der Anmeldung:
**07.07.2010 Patentblatt 2010/27**

(73) Patentinhaber: **Hella KGaA Hueck & Co.**
**59552 Lippstadt (DE)**

(72) Erfinder:
• **Klebanov, Boris**
**13509 Berlin (DE)**
• **Hoffmann, Ingo**
**10437 Berlin (DE)**

(74) Vertreter: **Schaumburg, Thoenes, Thurn, Landskron, Eckert**
**Patentanwälte**
**Postfach 86 07 48**
**81634 München (DE)**

(56) Entgegenhaltungen:
**US-A1- 2005 102 083**

• **COHN T E ET AL: "Pseudoreal-Time Activity Detection for Railroad Grade-Crossing Safety" IEEE TRANSACTIONS ON INTELLIGENT TRANSPORTATION SYSTEMS, IEEE SERVICE CENTER, PISCATAWAY, NJ, US, Bd. 5, Nr. 4, 1. Dezember 2004 (2004-12-01), Seiten 319-324, XP011122968 ISSN: 1524-9050**
• **VAN LEEUWEN M B ET AL: "Motion estimation with a mobile camera for traffic applications" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA, IEEE, US, 3. Oktober 2000 (2000-10-03), Seiten 58-63, XP010528913 ISBN: 978-0-7803-6363-2**

**Beschreibung**

Die Erfindung betrifft ein Verfahren zum Ermitteln der Änderung des Nickwinkels einer Kamera eines Fahrzeugs, insbesondere eines Straßenfahrzeugs. Es werden mindestens drei Bilder mit jeweils einer Abbildung eines Erfassungsbereichs vor dem Fahrzeug aufgenommen und den Bildern entsprechende Bilddaten erzeugt.

Es sind Fahrzeuge bekannt, die kamerabasierte Fahrerassistenzsysteme haben. Solche Fahrzeuge haben mindestens ein Kamerasystem mit mindestens einer Kamera, die Bilder mit Abbildungen eines Erfassungsbereichs, vorzugsweise eines Erfassungsbereichs in Fahrtrichtung vor dem Fahrzeug, erfasst und den Bildern entsprechende Bilddaten erzeugt. Die erzeugten Bilddaten werden dann mit Hilfe geeigneter Verarbeitungsroutinen verarbeitet. Zum Verarbeiten der Bilddaten werden vorzugsweise digitale Signalprozessoren im Fahrzeug eingesetzt. Dabei ist es bekannt, verschiedene Objekte in einzelnen Bildern zu detektieren und die Lage eines Objekts in verschiedenen Bildern miteinander zu vergleichen. Insbesondere werden die Objekte über mehrere Bilder verfolgt. Dazu werden insbesondere sogenannte Trackingverfahren verwendet.

Neben sogenannten Fahrspurhalteassistenten, einer kamerabasierten Überwachung des toten Winkels und einer kamerabasierten Verkehrszeichenerkennung sind auch kamerabasierte Fahrerassistenzsysteme zur Steuerung der Lichtabgabe der Frontscheinwerfer von Fahrzeugen bekannt. Aufgabe dieser kamerabasierten Assistenzsysteme zur Steuerung der Lichtabgabe der Frontscheinwerfer des Fahrzeugs ist es, eine größtmögliche Ausleuchtung des Bereichs vor dem Fahrzeug zu erreichen, ohne andere Verkehrsteilnehmer, insbesondere ohne vorausfahrende oder entgegenkommende Verkehrsteilnehmer, zu blenden und dadurch zu behindern. Dazu wertet das Fahrerassistenzsystem neben den ermittelten Bilddaten weitere Fahrzeugdaten, wie beispielsweise die Geschwindigkeit des Fahrzeugs und den Lenkwinkels des Fahrzeugs aus. Diese weiteren Informationen erhält das Fahrerassistenzsystem vorzugsweise mit Hilfe von über einen Fahrzeugbus des Fahrzeugs übertragenen Daten.

Eine Änderung des Nickwinkels des Fahrzeugs führt dazu, dass sich auch der Winkel des durch die Frontscheinwerfer des Fahrzeugs abgestrahlten Lichts in Bezug auf die Horizontale verändert. Eine dauerhafte Änderung des Nickwinkels, beispielsweise durch eine Erhöhung der Zuladung im hinteren oder in vorderen Bereich des Fahrzeugs kann durch bekannte Leuchtweitenregulierungssysteme (LWR) ausgeglichen werden. Das abrupte Ändern des Nickwinkels im dynamischen und hochdynamischen Bereich, insbesondere auf Grund von Unebenheiten der Fahrbahn und der Geschwindigkeit des Fahrzeugs, mit der es sich auf der Fahrbahn bewegt, führen dazu, dass der Bereich vor dem Fahrzeug nicht optimal, d.h. nicht größtmöglich, ausgeleuchtet wird und/oder das andere Verkehrsteilnehmer durch das von den Frontscheinwerfern abgestrahlte Licht geblendet werden.

Eine denkbare Lösung ist es, die Lichtabstrahlung der Frontscheinwerfer soweit zu reduzieren, dass bei Änderungen des Nickwinkels des Fahrzeugs im üblichen Bereich keine Beeinträchtigung anderer Verkehrsteilnehmer auftritt. Jedoch hat diese defensive Ansteuerstrategie der Frontscheinwerfer den Nachteil, dass dann der Bereich vor dem Fahrzeug nicht größtmöglich ausgeleuchtet wird.

Aus dem Dokument US 2005/0102083 A1 ist ein Steuersystem zur Stabilitätskontrolle bekannt, bei dem Bilder einer Kamera zum Detektieren eines Rollwinkels genutzt werden. Es kann eine Horizontlinie genutzt werden, um den absoluten Rollwinkel zu schätzen. Die Rollrate kann durch Messung der Änderung des Rollwinkels gegenüber einem entfernten Objekt, wie Wolken oder Bergen, geschätzt werden. Bei Dunkelheit können durch die Frontscheinwerfer erzeugten Beleuchtungsmuster auf der Fahrbahn und Parklichter des Fahrzeugs genutzt werden. Die Bildwerte von zwei nacheinander aufgenommenen Bildern werden analysiert, um die am besten übereinstimmende Bewegung, die mit den Änderungen im Bild korrespondiert, zu bestimmen. Der Gierwinkel, der Rollwinkel und der Nickwinkel können auch auf der Basis von Beschleunigungssignalen bestimmt werden.

Aus dem Dokument COHN T E ET AL: "Pseudoreal-Time Activity Detection for Railroad Grade-Crossing Safety" IEEE TRANSACTIONS ON INTELLIGENT TRANSPORTATION SYSTEMS; IEEE SERVICE CENTER, PISCATAWAY, NJ, US, Bd. 5, Nr. 4, 1. Dezember 2004 (2004-12-01), Seiten 319-324, XP011122968 ISSN: 1524-9050 ist ein System zum Detektieren eines bewegten Objekts bekannt, bei dem die Eigenbewegung der Kamera geschätzt wird und bei dem Merkmalspunkte im Bild detektiert und nachverfolgt werden, deren Bewegung inkonsistent mit der Kamerabewegung ist. Die Eigenbewegung wird mit Hilfe von zwei sequentiell aufgenommenen Bildern geschätzt.

Aus dem Dokument VAN LEEUWEN M B ET AL: "Motion estimation with a mobile camera for traffic applications" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA, IEEE, US, 3. Oktober 2000 (2000-10-03), Seiten 58-63, XP010528913 ISBN: 978-0-7803-6363-2 ist die Schätzung der Bewegung einer mobilen Kamera für Verkehrsanwendungen bekannt. Dabei wird das Verhältnis zwischen der Aufnahmerichtung der Kamera und der Fahrtrichtung des Fahrzeugs bei der Bildauswertung berücksichtigt.

Die Kameras von Kamerasystemen der in bekannten Fahrzeugen integrierten Fahrerassistenzsystemen haben zumindest während der Fahrt des Fahrzeugs eine bekannte und als konstant anzunehmende Lage relativ zum Fahrzeug und somit relativ zum Fahrzeugkoordinatensystem, so dass bei einer Nickwinkeländerung des Fahrzeugs auch eine Nickwinkeländerung der Kamera auftritt.

Aus dem Dokument EP 1 437 25 A1 sind eine Vorrichtung und ein Verfahren zur Einstellung der Neigung eines Fahrzeugfrontscheinwerfers bekannt, bei denen ein spezifischer Lichtpunkt erzeugt und erfasst wird. Abhängig von der ermittelten Position des Lichtpunkts wird eine Einstellung der Neigung des Frontscheinwerfers durchgeführt.

Aus dem Dokument DE 10 2007 041781 A1 sind eine Vorrichtung und ein Verfahren zur Erkennung von Fahrzeugen durch die Identifizierung von Lichtpunkten in aufgenommenen Bildern bekannt. Dabei wird verifiziert, ob ein Lichtpunkt von einem Fahrzeug stammt oder nicht.

Aus dem Dokument EP 642950 B1 ist eine automatische Frontscheinwerfereinstellsteuerung bekannt, bei der basierend auf der Erkennung der eignen Lichtverteilung eine Leuchtweitenregulierung durchgeführt wird.

Aufgabe der Erfindung ist es, ein Verfahren und eine Vorrichtung zum Ermitteln der Änderung des Nickwinkels einer Kamera eines Fahrzeugs anzugeben, bei dem bzw. bei dem die Änderung des Nickwinkels auf einfache Art und Weise zuverlässig ermittelt wird.

Diese Aufgabe wird durch ein Verfahren mit den Merkmalen des geltenden Patentanspruchs 1 und durch eine Vorrichtung mit den Merkmalen des unabhängigen Vorrichtungsanspruchs gelöst. Vorteilhafte Weiterbildungen der Erfindung sind in den abhängigen Patentansprüchen angegeben.

Durch ein Verfahren zum Ermitteln einer Änderung des Nickwinkels einer Kamera eines Fahrzeugs mit den Merkmalen des Patentanspruchs 1, sowie durch eine Vorrichtung mit den Merkmalen des unabhängigen Vorrichtungsanspruchs wird erreicht, dass mit Hilfe von mindestens zwei aufgenommenen Bildern der Verlauf einer Geraden ermittelt wird. Die Bildposition der Abbildung des Objekts in einem dritten Bild und Abstand zwischen dieser ermittelten Bildposition und der Geraden werden ermittelt. Der ermittelte Abstand wird zur Bestimmung der Änderung des Nickwinkels genutzt. Dadurch kann die Nickbewegung der Kamera und somit die Nickbewegung des Fahrzeugs bei einer fest mit dem Fahrzeug verbundenen Kamera auf einfache Art und Weise ermittelt werden. Diese Ermittlung der Änderung des Nickwinkels bzw. der Änderung des Nickwinkels ist sowohl im dynamischen als auch im hochdynamischen Bereich möglich. Insbesondere kann die Nickwinkeländerung von Bild zu Bild auch bei Bildaufnahmefrequenzen von 10 bis 50 Bildern pro Sekunde durchgeführt werden.

Die Gerade verläuft vorzugsweise durch den Fluchtpunkt des Bildes. Das Fahrzeug bewegt sich während der Bildaufnahmen der sequentiell aufgenommenen Bilder auf das Objekt zu. Die Gerade kann auch als Epipolarlinie bezeichnet werden, wobei sich bei einer Geradeausbewegung des Fahrzeugs die Epipole vorzugsweise jeweils in der Bildmitte der aufgenommenen Bilder befinden, so dass die Epipolarlinien von ortsfesten Objekten ausgehend vom Bildzentrum, d.h. ausgehend vom Fluchtpunkt, sternförmig nach außen verlaufen.

Bei einer vorteilhaften Weiterbildung der Erfindung wird nach der Aufnahme des zweiten Bildes und vor der Aufnahme des dritten Bildes mindestens ein viertes Bild mit der Abbildung des Erfassungsbereichs vor dem Fahrzeug auf genommen und dem mindestens einen vierten Bild entsprechenden Bilddaten erzeugt und verarbeitet. Beim Verarbeiten der Bilddaten wird im vierten Bild eine vierte Abbildung des ortsfesten Objekts sowie deren Bildpositionen im vierten Bild als vierte Bildposition ermittelt. Ferner wird ausgehend von der ersten Bildposition, der zweiten Bildposition und zumindest der vierten Bildposition der Verlauf der Geraden ermittelt. Die Gerade kann wie bereits erwähnt auch durch eine Epipolarlinie angegeben werden.

Weiterhin ist es vorteilhaft, ausgehend von der ersten Bildposition, von zumindest der zweiten Bildposition und dritten Bildposition einen Verlauf einer neuen Geraden zu ermitteln. Nach der Aufnahme des dritten Bildes wird mindestens ein fünftes Bild mit einer Abbildung des Erfassungsbereichs vor dem Fahrzeug aufgenommen und dem mindestens einen fünften Bild entsprechende Bilddaten erzeugt. Diese Bilddaten werden verarbeitet, indem im fünften Bild eine fünfte Abbildung des ortsfesten Objekts und deren Bildposition im fünften Bild als fünfte Bildposition ermittelt werden. Ausgehend vom Abstand der fünften Bildposition zur ermittelten neuen Geraden wird eine weitere Änderung des Nickwinkels der Kamera bestimmt. Dadurch wird erreicht, dass alle erfassten Bilder zum Ermitteln der Geraden herangezogen werden können, auch die, für die eine Nickwinkeländerung gegenüber zuvor erfassten Bildern bereits ermittelt worden ist. Wird die Gerade unter Berücksichtigung der ermittelten Bildpositionen der Abbildungen des ortsfesten Objekts einer Vielzahl von Bildern ermittelt, so entspricht die Gerade auf Grund der statistischen Verteilung einer Geraden ohne Nickwinkeländerung, d.h. mit einem voreingestellten Nickwinkel der Kamera zum Fahrzeug und zum Koordinatensystem des Fahrzeugs.

Vorzugsweise wird ein an die ermittelten Bildpositionen angenäherter Verlauf der Geraden ermittelt, d.h. die Gerade wird durch die ermittelten Bildpositionen hindurch gelegt, so dass alle zur Bestimmung der Geraden ermittelten Bildpositionen möglichst nah an der Geraden liegen. Alternativ oder zusätzlich kann die Gerade durch mindestens eine der ermittelten Bildpositionen verlaufen. Als Bildposition eines Objekts dient dabei insbesondere eine ermittelte Bildpunktkoordinate in x-Richtung und y-Richtung einer x-y-Bildpunktmatrix eines Bilderfassungssensors der Kamera. Wird das Objekt auf mehrere Bildpunkterfassungsbereiche abgebildet, kann ein Bildpunkterfassungsbereich ausgewählt und dessen Position zur Weiterverarbeitung genutzt werden. Insbesondere wird ein Bildpunkterfassungsbereich mittig der Objektabbildung zur Weiterverarbeitung als Bildposition genutzt.

Die Gerade kann auch mit Hilfe eines Verschiebevektors der Bildpositionen zwischen mindestens zwei Bildern ermittelt werden. Besonders vorteilhaft ist es, jeweils einen Verschiebevektor der Bildpositionen der Abbildungen des Objekts jeweils zwischen den Bildern von mindestens zwei Bildpaaren zu ermitteln. Die Bildpaare umfassen jeweils zwei nacheinander aufgenommene Bilder. Ausgehend von den ermittelten Verschiebevektoren kann ein gemittelter Verschiebevektor ermittelt werden. Das erste Bildpaar umfasst dabei vorzugsweise das erste und das zweite Bild und das zweite Bildpaar umfasst vorzugsweise das zweite und ein zwischen dem zweiten und dem dritten Bild aufgenommenes viertes Bild.

Aus einem Verschiebevektor bzw. aus dem gemittelten Verschiebevektor kann einfach eine Geradengleichung der Geraden ermittelt werden. Auch die Mittlung der Verschiebevektoren ist relativ einfach und mit geringen Ressourcen möglich. Dadurch kann auf einfache Art und Weise ein an die ermittelten Bildpositionen angenäherter Verlauf der Geraden ermittelt werden. Ferner kann ein weiterer Verschiebevektor zwischen den Bildpositionen der Abbildungen des Objekts zwischen der zweiten und der dritten Bildposition bzw. zwischen der vierten und der dritten Bildposition ermittelt werden. Die Nickwinkeländerung kann dann einfach durch den Winkel zwischen dem weiteren Verschiebevektor und der Geraden ermittelt werden.

Weiter ist es vorteilhaft, die Abbildungen von mindestens zwei ortfesten Objekten im ersten und in jedem der weiter aufgenommenen Bilder, sowie deren Bildpositionen im jeweiligen Bild zu ermitteln. Abhängig von der Bildposition der Abbildungen der Objekte im jeweiligen Bild wird eine Struktur der Bildpositionen im Bild, vorzugsweise als Gerade oder als Funktion, ermittelt. Die Funktion kann beispielsweise mit Hilfe eines Polynoms n-ter Ordnung oder als Fouriertransformation ermittelt werden. Dabei kann mindestens ein Verschiebevektor zwischen den Verläufen der Bildpositionen von mindestens zwei Bildern ermittelt werden. Ausgehend von dem mindestens einen Verschiebevektor wird dann die Gerade ermittelt. Dadurch kann die Gerade auch ausgehend von mehreren ermittelten ortsfesten Objekten ermittelt werden. Weiterhin ist es vorteilhaft, die Änderung des Nickwinkels mit Hilfe des ermittelten Abstandes der dritten Bildposition zur Geraden in Richtung der y-Achse einer x-y-Bildpunktmatrix eines Bilderfassungssensors der Kamera 17 zu ermitteln. Dabei verläuft die x-Achse der Bildpunktmatrix parallel zur y-Achse des Fahrzeugkoordinatensystems, d.h. quer zur Fahrtrichtung in einer parallelen Ebene zur Fahrbahn. Alternativ kann die x-Achse der Bildpunktmatrix in einem voreingestellten Winkel zur y-Achse des Fahrzeugkoordinatensystems verlaufen.

Die Änderung des Nickwinkels $\alpha$ kann insbesondere nach folgender Gleichung berechnet werden:

$$\tan \Delta\alpha = a/b,$$

wobei

a   der Abstand der dritten Bildposition zur ermittelten Geraden, und

b   der Abstand der Bildebene zum bildseitigen Hauptpunkt der Kameraoptik ist.

Die Bildebene wird durch den Bilderfassungsbereich des Bilderfassungssensors gebildet oder der Bilderfassungsbereich des Bilderfassungssensors ist in der Bildebene des optischen Systems der Kamera angeordnet. Der Abstand b wird auch als Bildweite bezeichnet. Der Hauptpunkt der Kameraoptik liegt vorzugsweise in der dem Bilderfassungssensor zugewandten Linse der Kameraoptik, wobei die Kameraoptik vorzugsweise das Objektiv der Kamera umfasst.

Besonders vorteilhaft ist es, den Lenkwinkel des Fahrzeugs zwischen der sequentiellen Bildaufnahme von mindestens zwei Bildern zu ermitteln und bei der Verarbeitung der Bilddaten mindestens eines der Bilder zu berücksichtigen. Insbesondere kann mit Hilfe des ermittelten Lenkwinkels eine Korrektur der ermittelten Bildposition der Abbildung des Objekts durchgeführt werden. Dadurch ist eine von der Lenkbewegung des Fahrzeugs unabhängige Ermittlung des Nickwinkels möglich, so dass die Änderung des Nickwinkels auf einfache Art und Weise korrekt bestimmt werden kann. Andernfalls könnte der Nickwinkel nur zuverlässig bei einer Geradeausfahrt des Fahrzeugs bestimmt werden.

Ausgehend von der ermittelten Änderung des Nickwinkels der Kamera kann eine einzustellende Lichtverteilung mindestens eines Frontscheinwerfers des Fahrzeugs ermittelt und festgelegt werden. Alternativ oder zusätzlich kann ein Korrekturwert zur Korrektur der Lichtverteilung der Frontscheinwerfer des Fahrzeugs ermittelt werden. Dadurch kann eine optimale, d.h. größtmögliche, Ausleuchtung des Bereiches vor dem Fahrzeug erreicht werden, ohne dass andere Verkehrsteilnehmer behindert werden, selbst wenn eine Nickbewegung des Fahrzeugs auftritt.

Besonders vorteilhaft ist es, eine einzustellende Lichtverteilung der Frontscheinwerfer des Fahrzeugs ausgehend von der ermittelten Änderung des Nickwinkels der Kamera zu ermitteln. Alternativ oder zusätzlich kann ein Korrekturwert zur Korrektur der durch die Frontscheinwerfer des Fahrzeugs erzeugten Lichtverteilung ermittelt werden. Weist das Fahrzeug nur einen Frontscheinwerfer auf oder wird nur ein Frontscheinwerfer zur Ausleuchtung des Bereichs vor dem Fahrzeug genutzt, so wird eine dem ermittelten Nickwinkel bzw. der ermittelten Nickwinkeländerung entsprechende Lichtverteilung des einen Frontscheinwerfers eingestellt. Sind mehrere Frontscheinwerfer vorhanden und werden diese zur Beleuchtung des Bereichs vor dem Fahrzeug eingesetzt, kann eine neue einzustellende Gesamtlichtverteilung bzw. ein Korrekturwert der Gesamtlichtverteilung ermittelt werden. Alternativ können auch beim Einsatz mehrerer Frontscheinwerfer die für jeden Frontscheinwerfer einzustellende individuelle Lichtverteilungen ermittelt bzw. jeweils ein Korrekturwert zur Korrektur der Lichtverteilung jedes Frontscheinwerfers des Fahrzeugs ermittelt werden.

Zur Bildaufnahme der Bilder wird eine monokulare Kamera, vorzugsweise eine Schwarz-Weiß-Kamera zum Erfassen von Graustufenbildern, verwendet. Die zu verarbeitende Datenmenge bei einer Schwarz-Weiß-Kamera ist geringer als bei entsprechenden Farbbildern, so dass die Verwendung einer Schwarz-Weiß-Kamera hinreichend genau ist und den Verarbeitungsaufwand zur Verarbeitung der Bilddaten reduziert. Besonders vorteilhaft ist es, wenn als ortsfestes Objekt eine ortsfeste Lichtquelle genutzt wird. Eine solche ortsfeste Lichtquelle ist beispielsweise eine Lichtquelle einer Straßenbeleuchtung, eine Lichtquelle einer Signalanlage, eine Lichtquelle einer Verkehrszeichenbeleuchtung, ein von einer ortsfesten Lichtquelle angestrahltes und zumindest ein Teil des Lichts der Lichtquelle reflektierendes ortsfestes Objekt, wie beispielsweise eine Werbetafel. Ferner können als ortsfeste Objekte Verkehrszeichen oder Verkehrsleiteinrichtungen genutzt werden. Wird in einem ersten Schritt eine Abbildung einer Lichtquelle in einem aufgenommenen Bild detektiert, kann in einem zweiten Schritt geprüft werden, ob es sich bei der Lichtquelle um eine ortsfeste Lichtquelle handelt. Diese Überprüfung kann insbesondere im Rahmen der Klassifizierung der Lichtquelle bzw. des zu detektierten Objekts durchgeführt werden. Dabei kann überprüft werden, ob die Lichtquelle Helligkeitsschwankungen auf Grund einer Energieversorgung durch ein Energieversorgungsnetz mit einer Netzfrequenz 50 Hz oder 60 Hz aufweist. Weist die Lichtquelle solche Helligkeitsschwankungen auf, kann davon ausgegangen werden, dass es sich bei der Lichtquelle um eine ortsfeste Lichtquelle handelt, so dass die Position der Lichtquelle als ortsfest angenommen werden kann. Vorzugsweise unter Berücksichtigung weiterer Klassifizierungsmerkmale kann die Lichtquelle als ortsfestes Objekt klassifiziert werden. Eine Detektionsmöglichkeit, ob eine detektierte Lichtquelle Helligkeitsschwankungen auf Grund einer Energieversorgung durch ein Energieversorgungsnetz mit einer Netzfrequenz von 50 Hz oder 60 Hz aufweist, ist beispielsweise aus dem Dokument WO2006/0069978A2 bekannt. Die dort beschriebene Vorgehensweise zur Detektion der Helligkeitsschwankungen in Folge der Energieversorgung durch ein Energieversorgungsnetz mit einer Netzfrequenz von 50 Hz oder 60 Hz wird hiermit durch Bezugnahme in die vorliegende Beschreibung aufgenommen. Anzumerken ist, dass das Fahrzeug während den sequentiellen Aufnahmen der mindestens drei Bilder eine Fahrbewegung ausführt.

Die durch den unabhängigen Vorrichtungsanspruch spezifizierte Vorrichtung kann in gleicher Weise weitergebildet werden, wie das erfindungsgemäße Verfahren. Insbesondere kann die Vorrichtung mit den in den auf das Verfahren rückbezogenen abhängigen Patentansprüchen angegebenen Merkmalen bzw. entsprechenden Vorrichtungsmerkmalen weitergebildet werden.

Weitere Merkmale und Vorteile der Erfindung ergeben sich aus der folgenden Beschreibung, welche in Verbindung mit den beigefügten Figuren die Erfindung anhand von Ausführungsbeispielen näher erläutert.

Es zeigen:

Figur 1 eine schematische Darstellung eines Fahrzeugs in einer Verkehrssituation als Seitenansicht, wobei das Fahrzeug eine Vorrichtung zum Erfassen und Verarbeiten von Bildern hat;

Figur 2 eine schematische Darstellung des Fahrzeugs nach Figur 1 in einer weiteren Verkehrssituation als Seitenansicht;

Figur 3 die Verkehrssituation nach Figur 2, wobei das Fahrzeug gegenüber Figur 2 auf Grund von Fahrbahnunebenheiten eine Nickwinkeländerung aufweist;

Figur 4 eine Abbildung eines ersten mit Hilfe einer Kamera des Fahrzeugs aufgenommenen Bildes;

Figur 5 die Abbildung eines zweiten mit Hilfe der Kamera des Fahrzeugs aufgenommenen Bildes;

Figur 6 eine Abbildung eines dritten mit Hilfe der Kamera des Fahrzeugs aufgenommenen Bildes;

Figur 7 eine schematische Darstellung des Fahrbahnverlaufs und eines detektierten ortsfesten Objekts der Abbildung nach Figur 6, wobei zusätzlich die Bildpositionen der Abbildung des in den Bildern der Figuren 4 und 5 detektierten Objekts gekennzeichnet und eine durch die Bildposition der Abbildungen des Objekts dieser Bilder verlaufende Gerade eingezeichnet ist;

Figur 8 eine Abbildung eines mit Hilfe der Kamera des Fahrzeugs aufgenommenen Bildes mit Abbildungen mehrerer ortsfester Objekte;

Figur 9 eine schematische Darstellung des Fahrbahnverlaufs und der Bildposition der Abbildungen der drei ortsfesten Objekte nach Figur 8 sowie eine durch die Bildposition dieser Objek- te verlaufende Geraden;

Figur 10    die Bildpositionen der Abbildungen der Objekte nach Figur 9 in einem weiteren mit Hilfe der Kamera des Fahrzeugs auf- genommenen nicht dargestellten Bild, wobei zwischen der Aufnahme des Bildes nach Figur 8 und der Aufnahme des Bildes mit den Bildpositionen der Abbildungen der Objekte nach Figur 10 eine Änderung des Nickwinkels des Fahrzeugs mit der bildaufnehmenden Kamera erfolgt ist;

Figur 11    eine schematische Darstellung der Sichtlinien zwischen einer Bildpunktmatrix der Kamera und der tatsächlichen Bildposi- tion der Abbildung des Objekts und der erwarteten Bildposi- tion der Abbildung des Objekts;

Figur 12    eine vereinfachte schematische Darstellung der optischen Abbildung eines Objekts auf einem Bilderfassungssensor; und

Figur 13    ein Blockschaltbild mit einer Verarbeitungseinheit zum Ver- arbeiten mit Hilfe der Kamera erfasster Bilder.

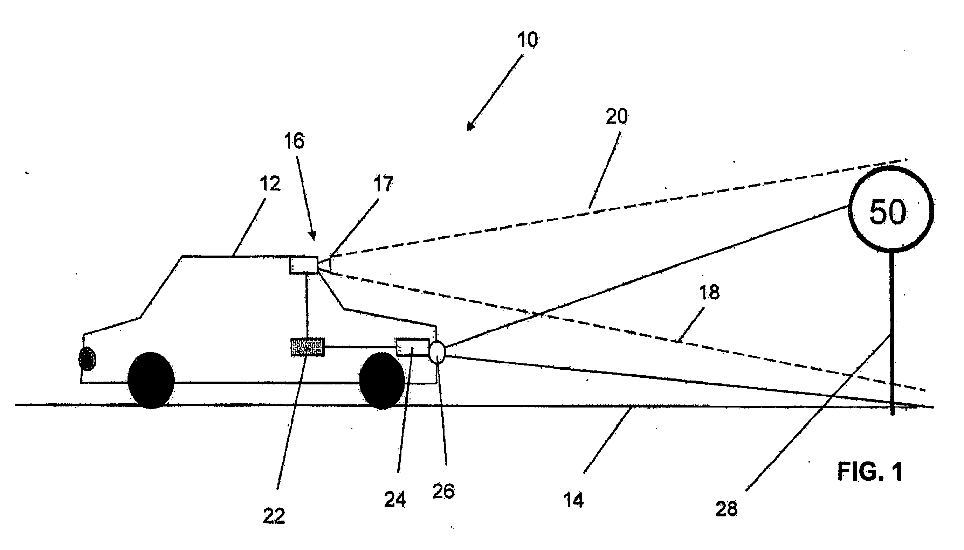

In Figur 1 ist eine Seitenansicht eines Fahr- zeugs 12 in einer Verkehrssituation 10 bei der Fahrt des Fahrzeugs 12 entlang einer Fahrbahn 14 gezeigt. Das Fahrzeug 12 hat ein Kamerasystem 16 mit mindestens einer Kamera 17. Das Kamerasystem 16 ist im vorliegenden Ausführungsbeispiel ein Monokamerasystem und ist ein Schwarzweißkamerasystem zur Ermittlung von Graustufenbildern. Das Kamerasystem 16 erfasst eine Bildfolge aus Bildern mit Abbildungen eines Erfassungsbereichs vor dem Fahrzeug 12. Der horizontale Erfassungsbereich ist in Figur 1 schematisch durch die Strichlinien 18, 20 dargestellt. Ferner werden den Bildern entsprechende Bilddaten erzeugt. Die erzeugten Bilddaten werden vom Kamerasystem 16 zu einer im Fahrzeug 12 angeordneten Verarbeitungseinheit 22 übertragen und von dieser weiterverarbeitet. Insbesondere werden die Bilddaten in der Verarbeitungseinheit 22 verarbeitet, um ein Fahrassistenzsystem für den Fahrzeugführer des Fahrzeugs 12 bereitzustellen. Pro Sekunde werden vorzugsweise 10 bis 50 Bilder von der Kamera 17 des Kamerasystems 16 fortlaufend aufgenommen und verarbeitet.

Die durch das Kamerasystem 16 erzeugten Bilddaten eines Objektes 28 werden von der Verarbeitungseinheit 22 verarbeitet, wobei die Abbildung des Objektes 28 als Objektabbildung beziehungsweise als Objekt detektiert und vorzugsweise der Objekttyp des Objektes 28 klassifiziert wird. Auf gleiche Weise können Verkehrsschilder, Leiteinrichtungen, Straßenleuchten, auf der Fahrspur vorausfahrende Fahrzeuge und auf einer Gegenfahrbahn der Fahrbahn 14 entgegenkommende Fahrzeuge als Objekte detektiert und deren Objekttyp klassifiziert werden. Insbesondere wird die Position der Abbildungen der in einem Bild detektierten Objekte 28 ermittelt und mit der Position der Abbildungen derselben Objekte 28 in einem in der Bildfolge nachfolgenden Bild verglichen. Zur Vereinfachung wird im Folgenden die Position einer Abbildung eines Objektes in einem Bild kurz als Position des Objektes im Bild oder Bildposition des Objektes bezeichnet. Der Vergleich der Position von Objekten 28 in einem Bild und einem nach diesem Bild auf- genommenen zweiten Bild wird beispielsweise genutzt, um das Fahrverhalten zu beeinflussen und/oder um dem Fahrer des Fahrzeugs 12 gezielte Informationen zum Umfeld und zum eigenen Fahrzeug 12 geben zu können. Diese Informationen können beispielsweise auch als Eingangsdaten für Fahrerassistenzsysteme, Verkehrs- zeichenerkennungssysteme, Objektverfolgungsrouti- nen und/oder Lichtassistenzsysteme dienen.

Eine Änderung der Lage des Kamerasystems 16 zwischen dem Zeitpunkt der Aufnahme des ersten Bildes mit Hilfe der Kamera 17 des Kamerasystems 16 und dem Zeitpunkt der Aufnahme des zweiten Bildes mit Hilfe der Kamera 17 muss ermittelt und als Eingangsgröße für ein Fahrerassistenzsystem zur automatischen oder teilautomatischen Steuerung der Lichtabgabe der Frontscheinwerfer 26 des Fahrzeugs 12 genutzt werden.

Nicht berücksichtigte Änderungen der Lage des Kamerasystems 16 können dazu führen, dass die Frontscheinwerfer 26 durch ein Lichtsteuermodul 24 derart angesteuert werden, dass nicht die optimale Ausleuchtung des Verkehrsraumes vor dem Fahrzeug 12 erfolgt. Somit können beispielsweise andere Verkehrsteilnehmer geblendet werden.

Eine Änderung der Lage des Kamerasystems 16 kann beispielsweise durch die Fahrzeugeigenbewe- gung und Fahrbahnunebenheiten hervorgerufen wer- den. Unter der Änderung der Lage des Kamerasystems 16 zur Umgebung des Fahrzeugs 12 wird jede Änderung der Art und Weise, in der sich das Kamerasystem 16 im Raum befindet, verstanden. Dies umfasst die Position des Kamerasystems 16 und die Ausrichtung der Kamera 17 des Kamerasystems 16 zur Umgebung des Fahr- zeugs 12. Bei einer entsprechenden hochdynamischen Verarbeitung der Bilddaten kann von einer ermittelten Lageänderung des Kamerasystems 16 auf eine Nickbewegung bzw. Nickwinkeländerung des Fahrzeugs 12 geschlossen werden. Die Nickwinkeländerung des Fahr- zeugs 12 kann bei der Ansteuerung der Frontscheinwerfer 26 berücksichtigt werden.

Als Änderung der Lage des Kamerasystems 16 werden insbesondere Nickwinkeländerungen ermittelt. Die jeweilige Lage der optischen Achse der Kamera 17 des Kamerasystems 16 wird üblicherweise im Bezug auf ein fahrzeugfestes Koordinatensystem, beispielsweise auf ein Fahrzeugkoordinatensystem oder ein Kamerakoordinatensystem bezogen. Ausgehend von einem solchen fahrzeugfesten Koordinatensystem kann auch die Lage der optischen Achse der Kamera 17 in Bezug auf ein Weltkoordinatensystem bestimmt werden. Das Fahrzeugkoordinatensystem ist ein rechtwinkliges Koordinatensystem mit einem Koordinatenursprung vorzugsweise im Schwerpunkt des Fahrzeugs 12 oder in der Mitte der Vorderachse des Fahrzeugs 12 auf der Fahrbahn 14, so dass die x-Achse nach vorne gerichtet ist und vorzugsweise waagerecht ist und sich in der Fahrzeuglängsebene befindet. Die y-Achse steht senkrecht auf der Fahrzeugslängsmittelebene und zeigt in Fahrtrichtung gesehen nach links. Die z-Achse zeigt nach oben. Bezogen auf ein Kamerakoordinatensystem, das die gleiche Ausrichtung wie das Fahrzeugkoordinatensystem hat, nur dass sich der Koordinatenursprung auf der optischen Achse der Kamera innerhalb der Kamera befindet, ist der Nickwinkel einer Kamera ein Winkel, der sich aus einer Drehung um die y-Achse ergibt.

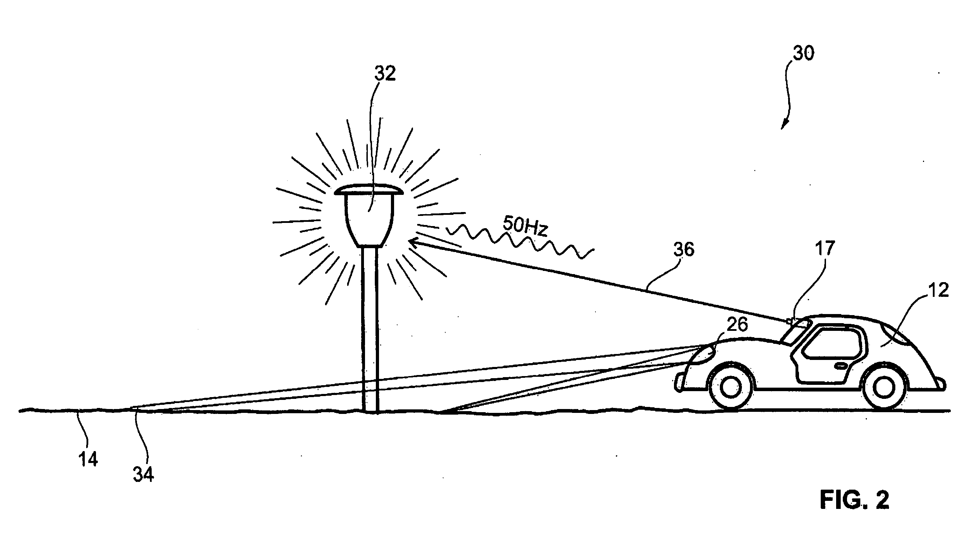

Figur 2 zeigt eine Seitenansicht des Fahrzeugs 12 in einer weiteren Verkehrssituation 30 bei der Fahrt des Fahrzeugs 12 entlang der Fahrbahn 14. Elemente mit gleichem Aufbau oder gleicher Funktion haben dieselben Bezugszeichen.

Das Fahrzeug 12 weist das in Verbindung mit Figur 1 beschriebene Kamerasystem 16 auf. Im Unterschied zu der ersten Verkehrssituation nach Figur 1 befindet sich im Erfassungsbereich der Kamera 17 ein ortsfestes Objekt 32 in Form einer Straßenleuchte, die mit einem Energieversorgungsnetz von 50 Hz zur Energieversorgung ihres Leuchtmittels der Straßenleuchte verbunden ist. Auf Grund der Energieversorgung mit einer 50 Hz Wechselspannung hat das von der Straßenleuchte 32 abgestrahlte Licht Helligkeitsschwankungen, die durch die Energieversorgung mit einer 50 Hz Wechselspannung hervorgerufen sind. Diese Helligkeitsschwankungen sind durch eine geeignete Auswertung der mit Hilfe der Kamera 17 aufgenommenen Bilder detektierbar. Diese Auswertung ist detailliert in dem Dokument WO 2006/0069978 A2 beschrieben. Die Beschreibung der Detektion ortsfester lichtabstrahlender Objekte in diesem Dokument wird hiermit durch Bezugnahme in die vorliegende Beschreibung aufgenommen.

Ist detektiert worden, dass die Straßenleuchte 32 mit einer Energieversorgung mit einer 50 Hz Wechselspannung verbunden werden, kann unterstellt werden, dass die Lichtquelle, d.h. die Straßenleuchte 32, ortsfest ist. Eine durch das abgestrahlte Licht der Frontscheinwerfer 26 des Fahrzeugs 12 auf der Fahrbahn 14 erzeugte Hell-Dunkel-Grenze ist mit 34 bezeichnet. Die Hell-Dunkel-Grenze 34 gibt die Grenze des vor dem Fahrzeug ausgeleuchteten Bereichs in Fahrtrichtung stromabwärts des Fahrzeugs 12 an.

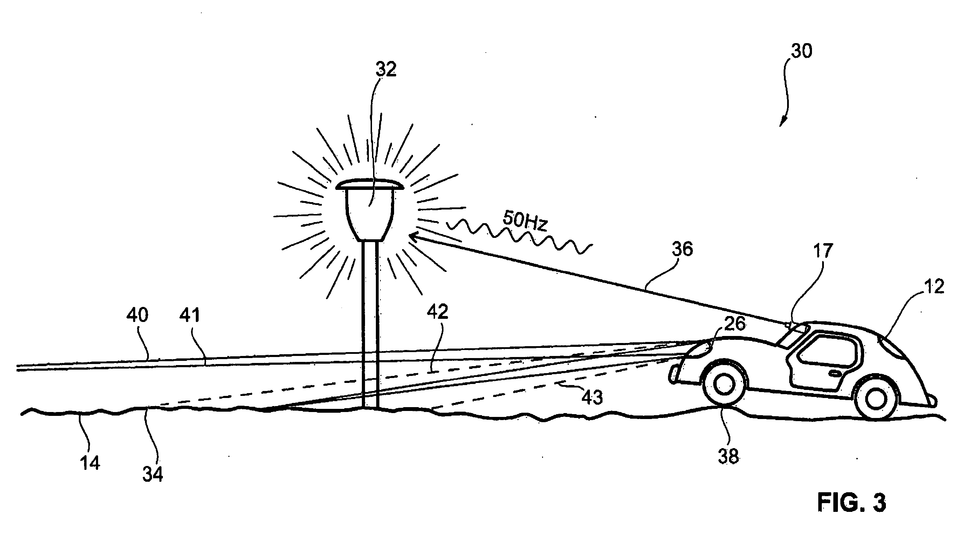

In Figur 3 ist die Verkehrssituation 30 nach Figur 2 dargestellt, wobei die Vorderachse des Fahrzeugs 12 auf Grund einer Fahrbahnunebenheit 38 gegenüber der Darstellung nach Figur 2 angehoben ist, währenddessen die Hinterachse nicht angehoben ist. Dadurch verändert sich der Nickwinkel des Fahrzeugs 12 und die durch die Frontscheinwerfer 26 abgestrahlten Lichtstrahlen werden im gezeigten Ausführungsbeispiel durch die Nickwinkeländerung angehoben, so dass die tatsächliche Hell-Dunkel-Grenze ohne eine Korrektur der Lichtverteilung der Frontscheinwerfer 26 nicht mehr in dem in Figur 3 dargestellten Bildausschnitt der Verkehrssituation 30 auf der Fahrbahn 14 auftrifft. Die Sollposition der Hell-Dunkel-Grenze bei einer optimalen Ausleuchtung des Bereichs vor dem Fahrzeug 12 ist in Figur 3 mit dem Bezugszeichen 34' bezeichnet. Die vom den Frontscheinwerfern 26 abgestrahlten oberen Lichtstrahlen sind in Figur 3 mit den Bezugszeichen 40, 41 bezeichnet.

Die Lichtstrahlen der Scheinwerfer 26 der Istausleuchtung sind mit Volllinien und die der optimalen Lichtverteilung mit Hilfe von Strichlinien 42, 43 dargestellt. Die Sichtlinie der Kamera 17 zum ortfesten Objekt 32 ist in den Figuren 2 und 3 mit den Bezugszeichen 36 bezeichnet. Wie aus den Figuren 2 und 3 ersichtlich ist, sollte die Änderung des Nickwinkels des Fahrzeugs 12 erfasst werden, um eine optimale Lichtabgabe der Frontscheinwerfer 26 des Fahrzeugs 12 zu ermöglichen und insbesondere durch die Vergrößerung der Leuchtweite der Frontscheinwerfer 26 mögliche Behinderung und Gefährdung anderer Verkehrsteilnehmer vermieden werden. Jedoch ist es auch wünschenswert, eine Nickwinkeländerung zu erfassen, die eine Verringerung der Leuchtweite der durch die Frontscheinwerfer 26 bewirkte Ausleuchtung des Bereichs vor dem Fahrzeug 12 bewirkt, d.h. eine Verschiebung der Hell-Dunkel-Grenze zum Fahrzeug 12 hin. Eine solche Nickwinkeländerung erfolgt insbesondere dann, wenn die Hinterachse des Fahrzeugs 12 über einer Fahrbahnunebenheit 38 angeordnet und der hintere Bereich des Fahrzeugs 12 dadurch angehoben ist, wobei die Vorderachse des Fahrzeugs 12 auf Normalniveau der Fahrbahn 14 bzw. in einer Vertiefung der Fahrbahn 14 angeordnet ist.

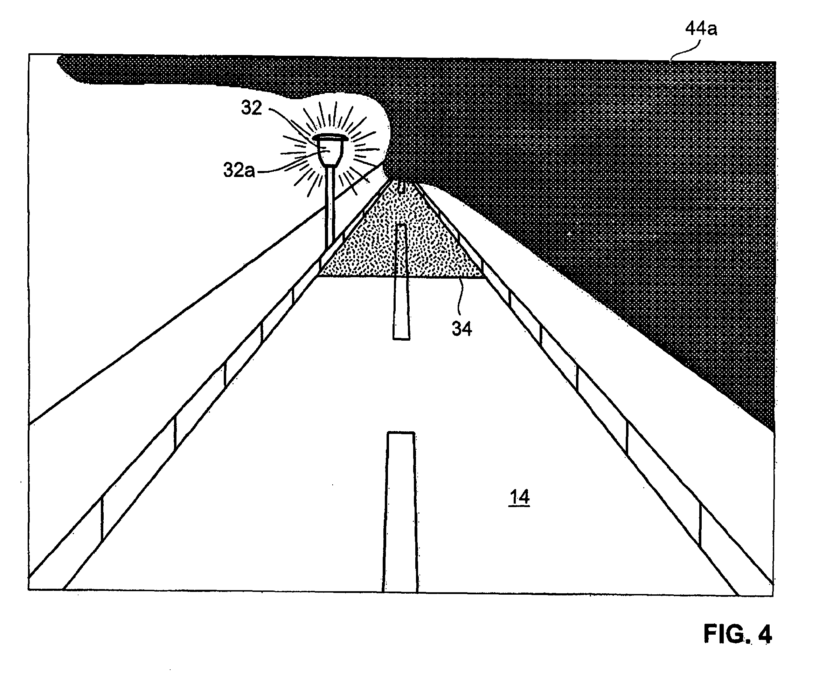

In Figur 4 ist ein erstes Bild 44a mit einer Abbildung des Erfassungsbereichs der Kamera 17 vor dem Fahrzeug 12 gezeigt. In dem Bild 44a ist eine Abbildung des ortsfesten Objekts 32 am linken Fahrbahnrand angeordnet. Die durch die Lichtabstrahlung der Frontscheinwerfer 26 des Fahrzeugs 12 auf der Fahrbahn 14 bewirkte Hell-Dunkel-Grenze 34 ist im Bild 44a schematisch durch einen Querstrich angedeutet. Die tatsächliche Hell-Dunkel-Grenze kann einen davon abweichenden Verlauf insbesondere einer ungleiche Verteilung auf den Fahrspuren und Fahrbahnrändern haben.

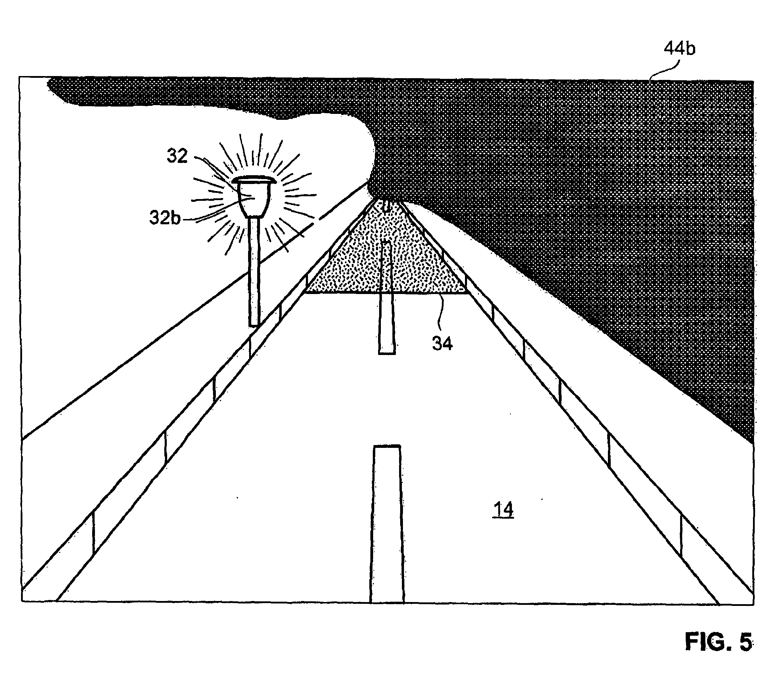

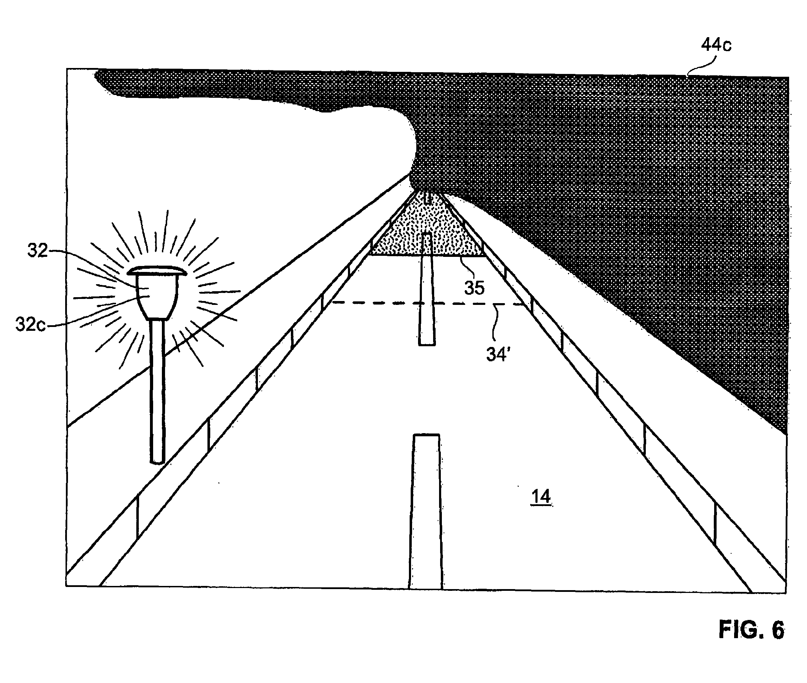

Bei einer weiteren Verarbeitung der Bilddaten des Bildes 44a wird die Abbildung des Objekts 32 detektiert und deren Bildposition 32a im Bild 44a ermittelt. Nach der Aufnahme des Bildes 44a sind mit Hilfe der Kamera 17 die in den Figuren 5 und 6 gezeigten Bilder 44b und 44c aufgenommen worden, währenddessen sich das Fahrzeug 12 weiter in Fahrtrichtung bewegt, so dass die Bildpositionen 32b, 32c der Abbildungen des ortsfesten Objekts 32 in den Bildern 44a, 44b und 44c sich ohne eine Nickwinkeländerung des Fahrzeugs 12 bzw. der Kamera 17 auf einem Fluchtpunktstrahl bzw. auf einer Geraden durch den Fluchtpunkt des Bildes 44a bzw. durch die Fluchtpunkte der Bilder 44a, 44b und44c liegen. Die Gerade verläuft vom Fluchtpunkt zum linken Bildrand.

Das in Figur 5 dargestellte Bild 44b zeigt eine Abbildung des Objekts 32 an einer anderen Bildposition, da sich das Fahrzeug 12 mit der Kamera 17 zwischen der Aufnahme des Bildes 44a und des Bildes 44b auf das Objekt 32 zu bewegt hat. Die Bildposition des Objekts 32 in Bild 44b ist mit den Bezugszeichen 32b bezeichnet.

Das in Figur 6 dargestellte Bild 44c zeigt eine Abbildung des Objekts 32 an einer Bildposition 32c. Zwischen der Bildaufnahme der Bilder 44b und 44c hat sich das Fahrzeug 12 weiter zum Fluchtpunkt des Bildes hin bewegt, so dass der Abstand der Kamera 17 zum Objekt 32 zwischen den Aufnahmen der Bilder 44b und 44c weiter verringert worden ist und das Objekt 32 somit vergrößert und weiter zum linken Bildrand hin verschoben ist. Gegenüber der Bildaufnahme des Bildes 44b ist bei der Bildaufnahme des Bildes 44c der Nickwinkel des Fahrzeugs 12 und somit der Nickwinkel der Kamera 17 verändert, so dass die durch die Frontscheinwerfer 26 abgestrahlten Lichtstrahlen nicht eine Hell-Dunkel-Grenze an der durch die Strichlinie 34' angedeutete Position erzeugen sondern an einer durch die Volllinie 35 gezeigten Position. Somit erfolgt eine Anhebung der von den Frontscheinwerfern 26 abgestrahlten Lichtstrahlen und eine Verschiebung der Hell-Dunkel-Grenze, so dass andere Verkehrsteilnehmer dadurch behindert werden können.

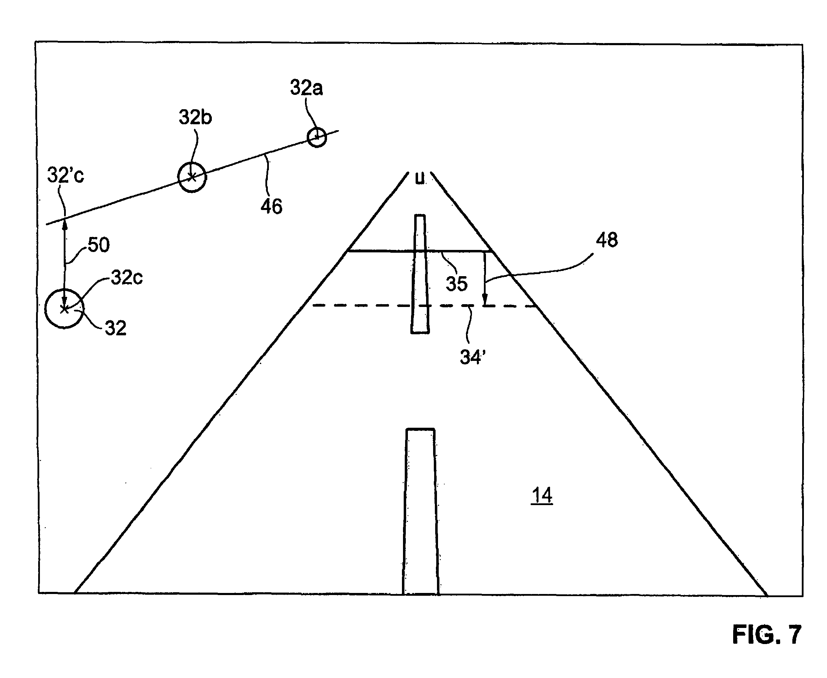

In Figur 7 ist eine schematische Darstellung des Fahrbahnverlaufs und der Hell-Dunkel-Grenzen 34', 35 des Bildes 44c sowie das Objekt 32 schematisch dargestellt. Ferner sind die Bildpositionen des Objekts 32 der Figuren 4 und 5 durch jeweils eine schematische Darstellung des Objekts 32 an der jeweiligen Bildposition 32a, 32b gezeigt. Ausgehend von den Bildpositionen 32a, 32b ist eine Gerade 46 ermittelt worden. Die Gerade 46 verläuft vorzugsweise durch den Fluchtpunkt des Bildes 44a. Ohne eine Nickwinkeländerung des Fahrzeugs 12 zwischen der Aufnahme des Bildes 44b und der Aufnahme des Bildes 44c würde die Bildposition 32c des Objekts 32 auf der Geraden 46 liegen. Durch die Nickwinkeländerung hat die Bildposition 32c einen Abstand 50 zur Geraden 46 in y-Richtung des Bilderfassungssensors. Die y-Richtung des Bilderfassungssensors verläuft parallel zu den seitlichen Bildrändern. Auf Grund der Nickwinkeländerung des Fahrzeugs 12 zwischen den Bildaufnahmen der Bilder 44b und 44c befindet sich die Hell-Dunkel-Grenze der durch die Lichtstrahlen der Frontscheinwerfer 26 erzeugten Hell-Dunkel-Grenze an der Position 35 und nicht an der gewünschten Position 34'. Somit muss eine Positionskorrektur entsprechend dem gezeigten Verschiebevektor 48 zur Korrektur der Hell-Dunkel-Grenze von der Position 35 auf die Position 34' erfolgen. Dies ist insbesondere mit Hilfe von hochdynamisch ansteuerbaren Frontscheinwerfern 26, d.h. Frontscheinwerfern 26 mit einer geringen Reaktionszeit zur Änderung der Lichtverteilung bzw. der Leuchtweite, möglich. Solche Frontscheinwerfer 26 können beispielsweise LED-Arrays mit einzeln, reihenweise- und/oder spaltenweise ansteuerbaren LEDs aufweisen, wobei zur Leuchtweiteneinstellung mehrere LEDs zu und/oder abgeschaltet, vorzugsweise ganze LED-Reihen zu und/oder abgeschaltet werden. Andere hochdynamische Frontscheinwerfer können Blenden, vorzugsweise Blendenwellen oder Shutter aufweisen, die relativ schnell ansteuerbar sind.

Ausgehend von dem Abstand der erwarteten Sollposition 32'c des Objekts 32 auf der Geraden 46 und der ermittelten Bildistposition 32c des Objekts 32 im Bild 44c der Abstand 50 in y-Richtung der x-y-Bilderpunktmatrix des Bilderfassungssensors ermittelt. Mit Hilfe dieses Abstandes 50 kann im Weiteren die Nickwinkeländerung auch als Gradangabe ermittelt werden, wobei abhängig von dem die Nickwinkeländerung repräsentierenden Abstand 50 oder vom ermittelten Winkelbetrag der Nickwinkeländerung und der Richtung der Abweichung 50 der Istposition 32c von der Sollposition 32'c eine neue durch die Frontscheinwerfer 26 zu erzeugende Lichtverteilung oder ein Korrekturwert zur Korrektur der aktuellen Lichtverteilung der Frontscheinwerfer 26 ermittelt werden kann.

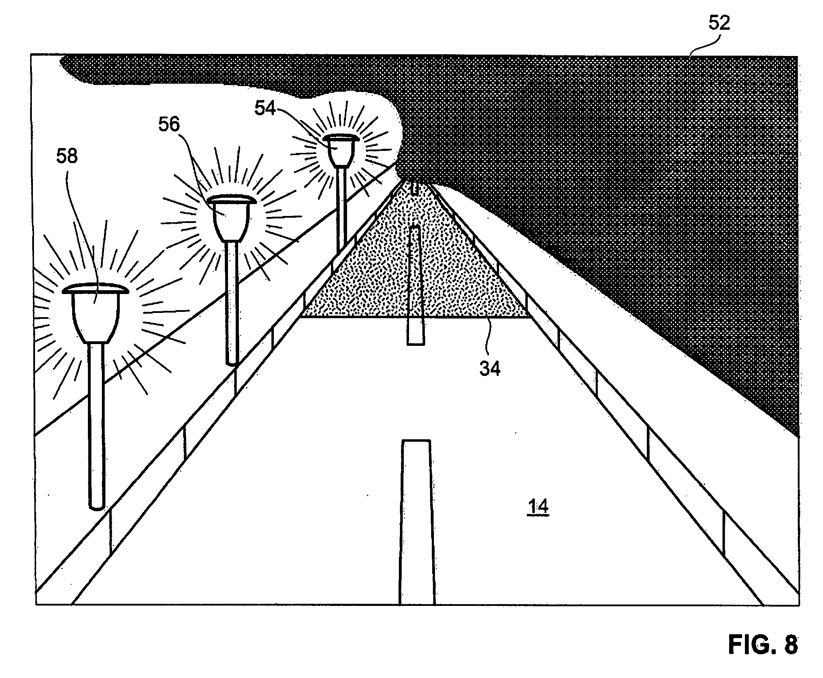

In Figur 8 ist eine Abbildung eines mit Hilfe der Kamera 17 aufgenommenen Bildes 52 mit insgesamt drei ortsfesten Objekten 54, 56, 58 gezeigt. Ferner ist eine Hell-Dunkel-Grenze 34 der durch die von den Frontscheinwerfern 26 abgestrahlten Lichtstrahlen erzeugten Ausleuchtung des Bereichs vor dem Fahrzeug 12 mit Hilfe der Volllinie 34 angedeutet.

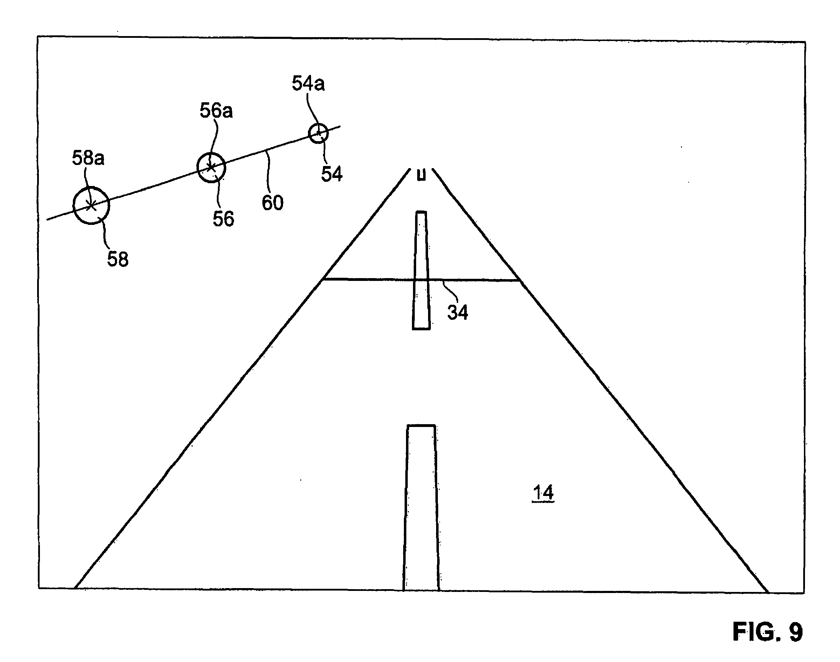

In Figur 9 ist eine vereinfachte schematische Darstellung des Verlaufs der Fahrbahn 14 und von mehreren ortsfesten Objekten 54 bis 58 dargestellt. Die Bildpositionen der Objekte 54 bis 58 mit den Bezugszeichen 54a, 56a und 58a bezeichnet. Ausgehend von den ermittelten Bildpositionen 54a, 56a, 58a der Objekte 54 bis 58 wurde der Verlauf einer Geraden 60 ermittelt. Die Gerade 60 verläuft vorzugsweise durch den Fluchtpunkt des Bildes 52.

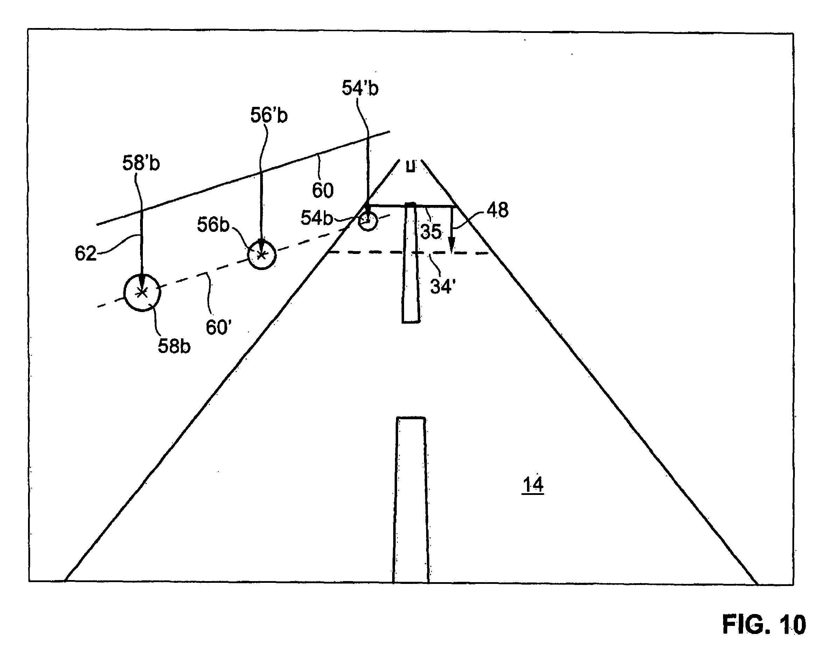

In Figur 10 ist die vereinfachte schematische Darstellung des Verlaufs der Fahrbahn 14 sowie der gewünschten Hell-Dunkel-Grenze 34' und der tatsächlichen Hell-Dunkel-Grenze 35 dargestellt. Ferner sind die in einem nach dem Bild 52 nach Figur 8 aufgenommenen weiteren Bild (nicht dargestellt) ermittelten Bildpositionen 54b, 56b, 58b der Objekte 54 bis 58 sowie die ausgehend vom im Bild 52 ermittelten Bildpositionen 54a bis 58a ermittelten Gerade 60 dargestellt. Die tatsächlichen ermittelten Bildpositionen 54b bis 58b weichen in Folge einer Nickwinkeländerung des Fahrzeugs 12 und somit der Kamera 17 von der erwarteten Sollpositionen 54'b bis 58'b ab. Die ermittelten tatsächlichen Bildpositionen 54b bis 58b liegen vorzugsweise auf einer gemeinsamen weiteren Geraden 60'. In einem weiteren Verarbeitungsschritt kann der Abstand zwischen den Geraden 60, 60' oder der Abstand der Geraden 60 zu einer ermittelten Bildposition 54b bis 58b eines Objekts 54 bis 58 oder der gemittelte Abstand der ermittelten Bildpositionen 54b bis 58b der Objekte 54 bis 58 in y-Richtung der x-y-Bildpunktmatrix eines Bilderfassungssensors der Kamera 17 ermittelt werden. Die Abweichung der Bildposition 58b von der erwarteten Bildposition 58'b ist für das Objekt 58 durch den mit dem Bezugszeichen 62 bezeichneten Pfeil angegeben.

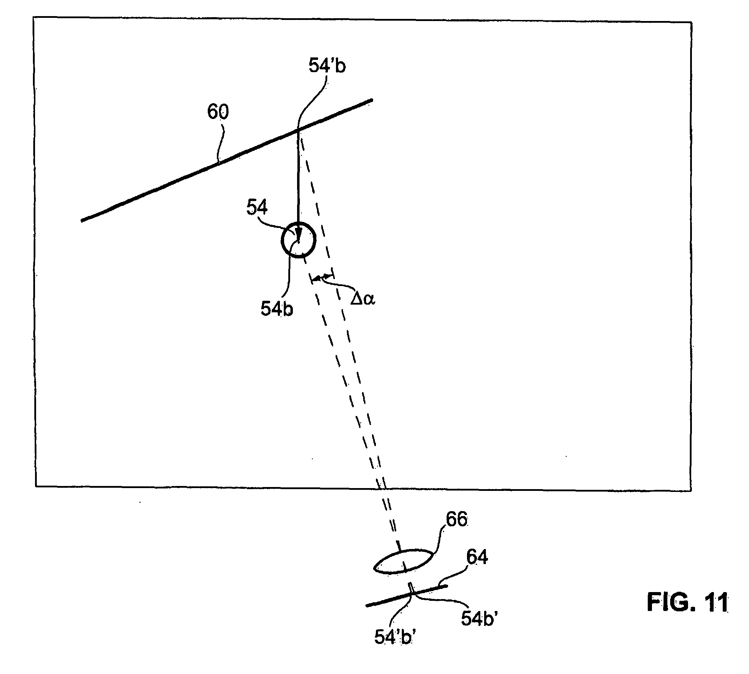

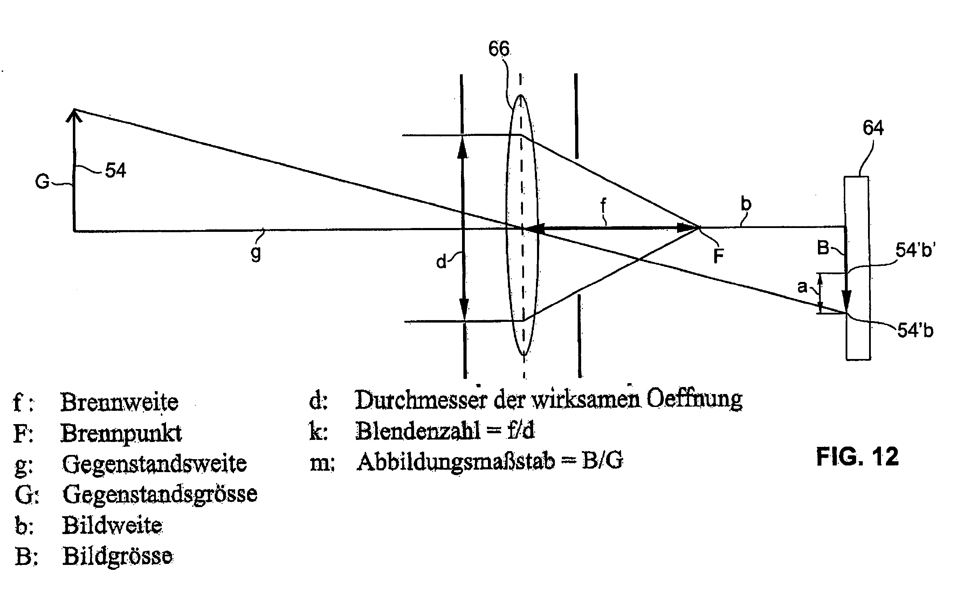

In Figur 11 sind die Bildpositionen 54b, 54'b des Objekts 54 auf einem Bilderfassungssensor 64 schematisch dargestellt. Die Bildposition 54b ist als Position auf der x-y-Bildpunktmatrix eines Bilderfassungssensors 64 mit dem Bezugszeichen 54b' und die Position der Bildposition 54'b ist auf der x-y-Bildpunktmatrix des Bilderfassungssensors 64 mit dem Bezugszeichen 54'b' bezeichnet. Zwischen dem Bilderfassungssensor 64 und dem Erfassungsbereich der Kamera 17 ist eine Kameraoptik angeordnet, von der in Figur 11 schematisch die bildebennennahe Linse 66 schematisch dargestellt ist. In der Hauptebene der Linse 66 ist der bildseitige Hauptpunkt des optischen Systems der Kamera 17, d.h. der Kameraoptik, angeordnet. Ausgehend vom Abstand des bildseitigen Hauptpunkts in der Linse 66 und des in der Bildebene angeordneten Bilderfassungssensors 64 und vom Abstand zwischen den Bildpositionen 54b' und 54'b' auf der x-y-Bildpunktmatrix kann die Änderung $\Delta\alpha$ des Nickwinkels der Kamera 17 einfach ermittelt werden. Dies wird nachfolgend mit der schematischen Schnittdarstellung des optischen Systems der Kamera 17 in Verbindung mit Figur 12 noch näher erläutert.

Das ortsfeste Objekt wird mit Hilfe des optischen Systems der Kamera 17, von dem in Figur 12 die bildnahe Linse 66 gezeigt ist, auf dem als Bildpunktmatrix ausgebildeten Bilderfassungsbereich eines Bilderfassüngssensors 64 abgebildet. Je nach dem Abbildungsmaßstab des optischen Systems der Kamera 17 ist die Bildgröße B um ein vielfaches geringer als die Gegenstandsgröße G des ortsfesten Objekts 54. Rein beispielhaft geben die Bildpositionen 54b' und 54'b' die Verschiebung der Bildpositionen von der erwarteten Bildposition zu einer tatsächlich ermittelten Bildposition an. Die Verschiebung der Bildpositionen von der erwarteten Bildposition zu einer tatsächlich ermittelten Bildposition erfolgte wie bereits erläutert auf Grund der Nickbewegungen den Fahrzeugs 12 und somit der Kamera 17. Ausgehend von dem Abstand zwischen den Bildpositionen 54'b und 54'b' der Bildweite b kann die Änderung $\Delta\alpha$ des Nickwinkels einfach bestimmt werden, wobei die Änderung des Nickwinkels $\Delta\alpha$ nach folgender Gleichung zumindest hinreichend genau bestimmt werden kann:

$$\tan \Delta\alpha = a/b.$$

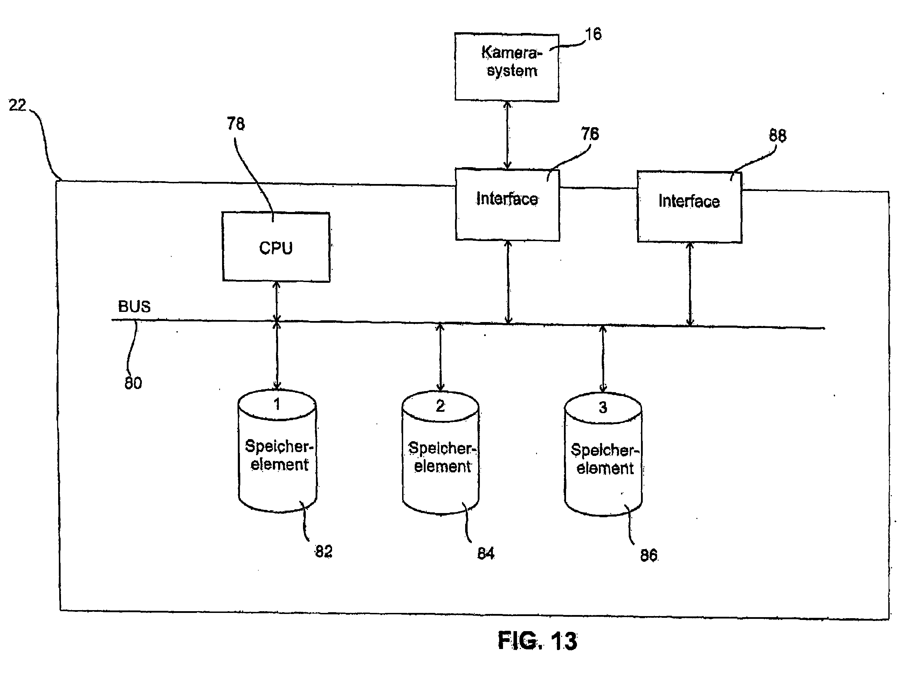

In Figur 13 ist ein Blockschaltbild mit der Verarbeitungseinheit 22 und dem Kamerasystem 16 gezeigt. Die Verarbeitungseinheit 22 umfasst eine Central Processing Unit (CPU) 78, einen Datenbus 80 und drei Speicherelemente 82 bis 86.

Die Verarbeitungseinheit 22 ist über ein erstes Interface 76 mit dem Kamerasystem 16 verbunden. Ferner umfasst die Verarbeitungseinheit 22 ein zweites Interface 88, über das die mit Hilfe der Verarbeitungseinheit 22 verarbeiteten Daten an andere Elemente, beispielsweise das Lichtsteuermodul 24, ausgegeben werden können. Vorzugsweise bildet das zweite Interface 88 eine Verbindung zu einem Fahrzeugbussystem.

Die CPU 78, das erste Interface 76, das zweite Interface 88 und die Speicherelemente 82, 84, 86 sind über den Datenbus 80 miteinander verbunden. Die den mit Hilfe des Kamerasystems 16 erzeugten den Bildern 44a bis 44c, 52 entsprechenden Bilddaten werden über das erste Interface 76 von dem Kamerasystem 16 an die Verarbeitungseinheit 22 als Eingangsdaten übermittelt. Die Bilddaten werden im ersten Speicherelement 82 gespeichert. Im zweiten Speicherelement 84 der Verarbeitungseinheit 22 sind mindestens Programmdaten mindestens eines Bildverarbeitungsprogramms zum Ermitteln der Bildpositionen 32a, 32b, 32c, 32c', 54a, 56a, 58a, 54b, 54'b, 56b, 56b', 58b, 58b' und der Geraden 46, 60, 60 gespeichert. Ebenso sind im zweiten Speicherelement 84 Programmdaten einer Routine zur Ermittlung einer Nickwinkeländerung ausgehend von den ermittelten Bildpositionen 32a, 32b, 32c, 32c', 54a, 56a, 58a, 54b, 54'b, 56b, 56b', 58b, 58b' und der Geraden 46, 60, 60' grespeichert.

Die ermittelte Änderung des Nickwinkels der Kamera 17 zwischen nacheinander mit Hilfe der Kamera 17 aufgenommenen Bildern wird dann als Nickwinkeländerung des Fahrzeugs 12 bei der Ansteuerung der Frontscheinwerfer 26 bzw. als Eingangsgröße für die Lichtsteuermodule 24 genutzt und/oder über das zweite Interface 88 ausgegeben.

Die Erfindung ist in Verbindung mit einer Monokamera beschrieben worden. Jedoch ist die Erfindung in gleicher Weise bei einem Stereokamerasystem einsetzbar. Die Erfindung zeichnet sich insbesondere dadurch aus, dass ein als statisches Objekt 32, 54 bis 58 identifiziertes Objekt über mehrere Einzelbilder einer Bildfolge, d.h. über sogenannte Bildframes, nachverfolgt wird und die Höhenabweichungen der Abbildung des Objekts 32, 54 bis 58 von einer erwarteten Höhe der Abbildung des Objekts 32 in einem nachfolgenden Bild ermittelt und ausgehend von dieser Höhenabweichung eine Änderung des Nickwinkels der Kamera 17 bzw. des Fahrzeugs 12 ermittelt wird. Ausgehend von der ermittelten Nickwinkeländerung kann eine Korrektur der Lichtabstrahlung des Fahrzeugs 12 erfolgen. Dadurch ist es möglich, andere Verkehrsteilnehmer, insbesondere Verkehrsteilnehmer in entgegenkommenden und vorausfahrenden Fahrzeugen, nicht zu blenden und somit den Verkehr nicht zu gefährden. Ist ein Objekt 32 als statisches Objekt 32 identifiziert, so kann seine Bewegungsbahn zwischen mehreren Frames verfolgt und eine Gerade 46, vorzugsweise eine Epipolarlinie, bestimmt werden. Auf dieser Epipolarlinie bewegt sich das Objekt 32 bei einer Eigenbewegung des Fahrzeugs 12 bzw. der Kamera 17 in Fahrtrichtung weiter, wenn keine Änderung des Nickwinkels erfolgt. Wenn eine Änderung des Nickwinkels erfolgt, liegt die ermittelte tatsächliche Bildposition des Objekts 32 nicht auf der Epipolarlinie sondern hat einen Abstand zu dieser. Die Eigenbewegung des Fahrzeugs 12 kann ferner vom Fahrzeug 12, vorzugsweise von einem Fahrzeugbus 80 übermittelt werden. Insbesondere können Eigengeschwindigkeit und Lenkwinkel des Fahrzeugs 12 berücksichtigt und erforderlichenfalls eine Bildkorrektur durchgeführt werden. Die ermittelten Nickwinkelabweichungen können für mehrere erfasste ortsfeste Objekte 54, 56, 58 separat ermittelt werden und dann statistisch ausgewertet werden, um die tatsächliche Nickwinkeländerung so exakt wie möglich zu ermitteln. Mit Hilfe der ermittelten Nickwinkeländerung kann eine Korrektur der Lichtverteilung der durch das von den Frontscheinwerfer 26 abgestrahlten Lichtstrahlen erfolgen. Somit kann die Lichtabstrahlung des Fahrzeugs 12 an den geänderten Nickwinkel des Fahrzeugs 12 angepasst werden. Bei hochdynamischen Systemen, insbesondere bei einer hochdynamischen Ansteuerung der Frontscheinwerfer 26 des Fahrzeugs 12, kann so sofort auf eine Nickwinkeländerung reagiert werden, so dass andere Verkehrsteilnehmer nicht geblendet werden sowie eine größtmögliche Ausleuchtung des Bereichs ohne Behinderung anderer Verkehrsteilnehmer sichergestellt wird.

Ausgehen von dem Verlauf von Nickwinkeländerungen über mehrere Bilder kann auch eine Vorhersage der Nickwinkeländerung erfolgen, da die Nickwinkeländerungen auf Grund der Fahrzeugfederung des Fahrzeugs 12 im Allgemeinen den Verlauf einer Schwingung haben. Dadurch kann die Frontscheinwerfereinstellung bzw. die Einstellung der Lichtverteilung der Frontscheinwerfer 26 zumindest auch unter Berücksichtigung der auf diese Weise vorhergesagten Nickwinkeländerung für das nächste Bild bzw. für die nächsten Bilder erfolgen.

**Patentansprüche**

1.  Verfahren zum Ermitteln einer Änderung des Nickwinkels einer fahrzeugfest in einem Fahrzeug, insbesondere einem Straßenfahrzeug, angeordneten Kamera umfassend folgende Schritte:

    sequentielles Aufnehmen von mindestens drei Bildern (44a, 44b, 44c) mit jeweils einer Abbildung eines Erfassungsbereichs vor dem Fahrzeug (12) und Erzeugen den Bildern entsprechenden Bilddaten,
    wobei das Fahrzeug während der sequentiellen Aufnahme der mindestens drei Bilder eine Fahrbewegung ausführt, und
    Verarbeiten der Bilddaten,

    - indem im ersten Bild-(44a) eine erste Abbildung eines ortsfesten statischen Objekts (32) und deren Bildposition (32a) im ersten Bild (44a) als erste Bildposition (32a) ermittelt wird,
    - mindestens eine zweite Abbildung des ortsfesten statischen Objekts (32) in dem mindestens einen zweiten Bild (44b) und deren Bildposition (32b) im zweiten Bild (44b) als zweite Bildposition (32b) ermittelt wird,
    - ausgehend von der ersten Bildposition (32a) und zumindest der zweiten Bildposition (32b) der Verlauf einer Geraden (46) durch die beiden Bildpositionen ermittelt wird,
    - im dritten Bild (44c) eine dritte Abbildung des ortsfesten statischen Objekts (32) und deren Bildposition (32c) im dritten Bild (44c) als dritte Bildposition (32c) ermittelt wird,
    - und indem ausgehend vom Abstand (50) der dritten Bildposition (32c) zur ermittelten Geraden (46) die Änderung des Nickwinkels ($\Delta\alpha$) der Kamera (17) bestimmt wird.

2.  Verfahren nach Anspruch 1, **dadurch gekennzeichnet, dass** nach der Aufnahme des zweiten Bildes (44b) und vor der Aufnahme des dritten Bildes (44c) mindestens ein viertes Bild mit einer Abbildung eines Erfassungsbereichs vor dem Fahrzeug (12) aufgenommen und dem mindestens einen vierten Bild entsprechende Bilddaten erzeugt und verarbeitet werden, indem im vierten Bild eine vierte Abbildung des ortsfesten Objekts (32) und deren Bildposition im vierten Bild als vierte Bildposition ermittelt wird, und indem ausgehend von der ersten Bildposition (32a), der zweiten Bildposition (32b) und zumindest der vierten Bildposition der Verlauf der Geraden (46) ermittelt wird.

3.  Verfahren nach einem der vorhergehenden Ansprüche, **dadurch gekennzeichnet, dass** ausgehend von der ersten Bildposition (32a), von zumindest der zweiten Bildposition (32b) und der dritten Bildposition (32c) ein Verlauf einer neuen Geraden ermittelt wird, dass nach der Aufnahme des dritten Bildes (44c) mindestens ein fünftes Bild mit einer Abbildung eines Erfassungsbereichs vor dem Fahrzeug (12) aufgenommen und dem mindestens einen fünften Bild entsprechende Bilddaten erzeugt und verarbeitet werden, indem im fünften Bild eine fünfte Abbildung des ortsfesten Objekts (32) und deren Bildposition im fünften Bild als fünfte Bildposition ermittelt wird, und indem ausgehend vom Abstand der fünften Bildposition zur ermittelten neuen Geraden die weitere Änderung des Nickwinkels ($\alpha$) der Kamera (17) bestimmt wird.

4.  Verfahren nach einem der vorhergehenden Ansprüche, **dadurch gekennzeichnet, dass** ein an die ermittelten Bildpositionen (32a bis 32c, 54a, 54b, 56a, 56b, 58a, 58b) angenäherter Verlauf der Geraden (46, 60) ermittelt wird und/oder dass die Gerade (46, 60) durch mindestens eine ermittelte Bildposition (32a bis 32c, 54a, 54b, 56a, 56b, 58a, 58b) verläuft.

5. Verfahren nach einem der vorhergehenden Ansprüche, **dadurch gekennzeichnet, dass** die Gerade (46, 60) mit Hilfe eines Verschiebevektors der Bildpositionen (32a bis 32c, 54a, 54b, 56a, 56b, 58a, 58b) zwischen mindestens zwei Bildern (44a, 44b, 44c, 52) ermittelt wird.

6. Verfahren nach Anspruch 5, **dadurch gekennzeichnet, dass** jeweils ein Verschiebevektor der Bildpositionen (32a bis 32c, 54a, 54b, 56a, 56b, 58a, 58b) der Abbildungen des Objekts (32) jeweils zwischen den Bildern (44a, 44b, 44c, 52) von mindestens zwei Bildpaaren mit jeweils zwei nacheinander aufgenommen Bildern (44a, 44b, 44c, 52) ermittelt wird, und dass ausgehend von den ermittelten Verschiebevektoren ein gemittelter Verschiebevektor ermittelt wird, wobei das erste Bildpaar vorzugsweise das erste Bild (44a) und das zweite Bild (44b) umfasst und wobei das zweite Bildpaar vorzugsweise das zweite (44b) und ein zwischen dem zweiten Bild (44b) und dem dritten Bild (44c) aufgenommenes viertes Bild umfasst.

7. Verfahren nach einem der vorhergehenden Ansprüche, **dadurch gekennzeichnet, dass** die Abbildungen von mindestens zwei ortsfesten Objekten (54, 56, 58) im ersten Bild (52) und jedem der weiteren aufgenommenen Bildern und deren Bildpositionen (54a, 54b, 56a, 56b, 58a, 58b) im jeweiligen Bild ermittelt werden, dass abhängig von den Bildpositionen (54a, 54b, 56a, 56b, 58a, 58b) der Abbildungen der Objekte (54, 56, 58) im jeweiligen Bild jeweils eine Struktur der Bildpositionen (54a, 54b, 56a, 56b, 58a, 58b) im Bild, vorzugsweise als Gerade (60) oder als Funktion, ermittelt wird, dass mindestens ein Verschiebevektor zwischen den Verläufen der Bildpositionen (54a, 54b, 56a, 56b, 58a, 58b) von mindestens zwei Bilden ermittelt wird und dass ausgehend von dem mindestens einen Verschiebevektor die Gerade (60) ermittelt wird.

8. Verfahren nach einem der vorhergehenden Ansprüche, **dadurch gekennzeichnet, dass** die Änderung des Nickwinkels (α) mit Hilfe des ermittelten Abstandes (50) der dritten Bildposition (32c) zur Geraden (46) in Richtung der y-Achse einer x-y-Bildpunktmatrix eines Bilderfassungssensors (64) der Kamera (17) ermittelt wird, wobei die x-Achse der Bildpunktmatrix parallel zur y-Achse des Fahrzeugkoordinatensystems oder in einem voreingestellten Winkel zur y-Achse des Fahrzeugkoordinatensystems verläuft.

9. Verfahren nach einem der vorhergehenden Ansprüche, **dadurch gekennzeichnet, dass** die Änderung des Nickwinkels (α) nach folgender Gleichung berechnet wird:

$$\tan \Delta\alpha = a/b, \text{ wobei}$$

a der Abstand der dritten Bildposition (32c) zur Geraden (46),
b der Abstand der Bildebene zum bildseitigen Hauptpunkt der Kameraoptik ist.

10. Verfahren nach einem der vorhergehenden Ansprüche, **dadurch gekennzeichnet, dass** der Lenkwinkel des Fahrzeugs (12) zwischen der sequentiellen Bildaufnahme von mindestens zwei Bildern (44a, 44b, 44c, 52) ermittelt und bei der Verarbeitung der Bilddaten mindestens eines der Bilder berücksichtigt (44a, 44b, 44c, 52) wird, insbesondere dass mit Hilfe des ermittelten Lenkwinkels eine Korrektur der ermittelten Bildposition (32a bis 32c, 54a, 54b, 56a, 56b, 58a, 58b) der Abbildung des Objekts (32, 54, 56, 58) durchgeführt wird.

11. Verfahren nach einem der vorhergehenden Ansprüche, **dadurch gekennzeichnet, dass** eine einzustellende Lichtverteilung mindestens eines Frontscheinwerfers (26) des Fahrzeugs (12) ausgehend von der ermittelten Änderung des Nickwinkels (α) der Kamera (17) und/oder dass ein Korrekturwert zur Korrektur der Lichtverteilung des mindestens einen Frontscheinwerfers (26) des Fahrzeugs (12) ermittelt wird.

12. Verfahren nach einem der vorhergehenden Ansprüche, **dadurch gekennzeichnet, dass** zur Bildaufnahme der Bilder (44a, 44b, 44c, 52) eine monokulare Kamera, vorzugsweise eine Schwarz-Weiß-Kamera zum Erfassen von Graustufenbildern, verwendet wird.

13. Verfahren nach einem der vorhergehenden Ansprüche, **dadurch gekennzeichnet, dass** das ortsfeste Objekt (32, 54, 56, 58) eine ortsfeste Lichtquelle, insbesondere eine Lichtquelle einer Straßenbeleuchtung, eine Lichtquelle einer Signalanlage, der Lichtquelle einer Verkehrszeichenbeleuchtung, ein von einer ortsfesten Lichtquelle angestrahltes und zumindest ein Teil des Lichts der Lichtquelle reflektierendes ortsfestes Objekts, ein Verkehrszeichen oder eine Verkehrsleiteinrichtung ist.

14. Verfahren nach Anspruch 13, **dadurch gekennzeichnet, dass** ermittelt wird, ob die Lichtquelle Helligkeitsschwankungen auf Grund einer Energieversorgung durch ein Energieversorgungsnetz mit einer Netzfrequenz von 50 Hz oder 60 Hz aufweist, und dass die Lichtquelle vorzugsweise unter Berücksichtigung weiterer Klassifikationsmerkmale als ortsfestes Objekt (32, 54, 56, 58) klassifiziert wird.

**15.** Vorrichtung zum Ermitteln einer Änderung des Nickwinkels einer fahrzeugfest in einem Fahrzeug, insbesondere einem Straßenfahrzeug, angeordneten Kamera,
mit mindestens einer Kamera (17) zum sequentiellen Aufnehmen von mindestens drei Bildern (44a, 44b, 44c) mit jeweils einer Abbildung eines Erfassungsbereichs vor dem Fahrzeug (12) und zum Erzeugen den Bildern (44a, 44b, 44c) entsprechender Bilddaten, beim Ausführen einer Fahrzeugbewegung während der sequentiellen Aufnahme der mindestens drei Bilder,
mit einer Verarbeitungseinheit (22) zum Verarbeiten der Bilddaten, wobei die Verarbeitungseinheit (22)

- im ersten Bild (44a)eine erste Abbildung eines ortsfesten statischen Objekts (32) und deren Bildposition (32a) im ersten Bild (44a) als erste Bildposition (32a) ermittelt,
- mindestens eine zweite Abbildung des ortsfesten statischen Objekts (32) in dem mindestens einen zweiten Bild (44b) und deren Bildposition (32b) im zweiten Bild (44b) als zweite Bildposition (32b) ermittelt,
- ausgehend von der ersten Bildposition (32a) und zumindest der zweiten Bildposition (32b) der Verlauf einer durch die Bildpositionen (32, 32b) verlaufenden Geraden (46) ermittelt,
- im dritten Bild (44c) eine dritte Abbildung des ortsfesten statischen Objekts (32) und deren Bildposition (32c) im dritten Bild (44c) als dritte Bildposition (32c) ermittelt,
- und wobei die Verarbeitungseinheit (22) ausgehend vom Abstand (50) der dritten Bildposition (32c) zur ermittelten Geraden (46) die Änderung des Nickwinkels (Δα) der Kamera (17) bestimmt.

**Claims**

**1.** A method for determining a change in the pitch angle of a camera arranged in a vehicle-fixed manner in a vehicle, in particular a road vehicle, comprising the following steps:

sequentially recording at least three images (44a, 44b, 44c), each of which with a representation of a detection area in front of the vehicle (12), and generating image data corresponding to the images,
wherein the vehicle performs a driving motion during the sequential recording of the at least three images, and
processing the image data,

- in that in the first image (44a) a first representation of a stationary static object (32) and its image position (32a) in the first image (44a) is determined as a first image position (32a),
- at least a second representation of the stationary static object (32) in the at least one second image (44b) and its image position (32b) in the second image (44b) is determined as a second image position (32b),
- on the basis of the first image position (32a) and at least the second image position (32b) the course of a straight line (46) through the two image positions is determined,
- in the third image (44c) a third representation of the stationary static object (32) and its image position (32c) in the third image (44c) is determined as a third image position,
- and in that, on the basis of the distance (50) between the third image position (32c) and the determined straight line (46) the change in the pitch angle (Δα) of the camera (17) is determined.

**2.** The method according to claim 1, **characterized in that** after recording the second image (44b) and before recording the third image (44c) at least a fourth image with a representation of a detection area in front of the vehicle (12) is recorded and image data corresponding to the at least one fourth image are generated and processed **in that** in the fourth image a fourth representation of the stationary object (32) and its image position in the fourth image is determined as a fourth image position, and **in that**, on the basis of the first image position (32a), the second image position (32b) and at least the fourth image position the course of the straight line (46) is determined.

**3.** The method according to one of the preceding claims, **characterized in that**, on the basis of the first image position (32a), of at least the second image position (32b) and the third image position (32c) a course of a new straight line is determined, **in that** after recording the third image (44c) at least a fifth image with a representation of a detection area in front of the vehicle (12) is recorded and image data corresponding to the at least one fifth image are generated and processed **in that** in the fifth image a fifth representation of the stationary object (32) and its image position in the fifth image is determined as fifth image position, and **in that**, on the basis of the distance between the fifth image position and the determined new straight line the further change in the pitch angle (α) of the camera (17) is determined.

4. The method according to one of the preceding claims, **characterized in that** a course of the straight line (46, 60) approximated to the determined image positions (32a to 32c, 54a, 54b, 56a, 56b, 58a, 58b) is determined and/or **in that** the straight line (46, 60) runs through at least one determined image position (32a to 32c, 54a, 54b, 56a, 56b, 58a, 58b).

5. The method according to one of the preceding claims, **characterized in that** the straight line (46, 60) is determined with the aid of a displacement vector of the image positions (32a to 32c, 54a, 54b, 56a, 56b, 58a, 58b) between at least two images (44a, 44b, 44c, 52).

6. The method according to claim 5, **characterized in that** one displacement vector of the image positions (32a to 32c, 54a, 54b, 56a, 56b, 58a, 58b) of the representations of the object (32) each time between the images (44a, 44b, 44c, 52) of at least two image pairs each of which having two sequentially recorded images (44a, 44b, 44c, 52) is determined each time, and **in that**, on the basis of the determined displacement vectors an averaged displacement vector is determined, wherein the first image pair preferably comprises the first image (44a) and the second image (44b) and wherein the second image pair preferably comprises the second image (44b) and a fourth image recorded between the second image (44b) and the third image (44c).

7. The method according to one of the preceding claims, **characterized in that** the representations of at least two stationary objects (54, 56, 58) in the first image (52) and each of the further recorded images and their image positions (54a, 54b, 56a, 56b, 58a, 58b) in the respective image are determined, **in that** dependent on the image positions (54a, 54b, 56a, 56b, 58a, 58b) of the representations of the objects (54, 56, 58) in the respective image a structure of the image positions (54a, 54b, 56a, 56b, 58a, 58b) in the image, preferably as a straight line (60) or as a function, is determined each time, **in that** at least one displacement vector between the courses of the image positions (54a, 54b, 56a, 56b, 58a, 58b) of at least two images is determined and **in that** on the basis of the at least one displacement vector the straight line (60) is determined.

8. The method according to one of the preceding claims, **characterized in that** the change in the pitch angle (α) is determined with the aid of the determined distance (50) between the third image position (32c) and the straight line (46) in the direction of the y-axis of an x-y-image point matrix of an image recording sensor (64) of the camera (17), wherein the x-axis of the image point matrix runs parallel to the y-axis of the vehicle coordinate system or in a preset angle with respect to the y-axis of the vehicle coordinate system.

9. The method according to one of the preceding claims, **characterized in that** the change in the pitch angle (α) is calculated according to the following equation:

$$\tan \Delta\alpha = a/b,$$

wherein

a is the distance between the third image position (32c) and the straight line (46),
b is the distance between the image plane and the image-side principal point of the camera optical system.

10. The method according to one of the preceding claims, **characterized in that** the steer angle of the vehicle (12) between the sequential image recording of at least two images (44a, 44b, 44c, 52) is determined and taken into account in the processing of the image data of at least one of the images (44a, 44b, 44c, 52), in particular **in that** with the aid of the determined steer angle a correction of the determined image position (32a to 32c, 54a, 54b, 56a, 56b, 58a, 58b) of the representation of the object (32, 54, 56, 58) is performed.

11. The method according to one of the preceding claims, **characterized in that** the light distribution to be set for at least one headlight (26) of the vehicle (12) is determined on the basis of the determined change in the pitch angle (α) of the camera (17) and/or in that a correction value for the correction of the light distribution of the at least one headlight (26) of the vehicle (12) is determined.

12. The method according to one of the preceding claims, **characterized in that** for image recording of the images (44a, 44b, 44c, 52) a monocular camera, preferably a black-and-white camera for detecting gray scale images is used.

13. The method according to one of the preceding claims, **characterized in that** the stationary object (32, 54, 56, 58) is a stationary light source, in particular a light source of a street light, a light source of a traffic signal facility, the light source of a traffic sign illumination, a stationary object illuminated by a stationary light source and reflecting at least part of the light of the light source, a traffic sign or a traffic guidance system.

**14.** The method according to claim 13, **characterized in that** it is determined whether the light source has brightness fluctuations as a result of an energy supply by a power grid with a power frequency of 50 Hz or 60 Hz, and **in that** the light source is classified as a stationary object (32, 54, 56, 58) preferably taking into account further classification features.

**15.** A device for determining a change in the pitch angle of a camera arranged in a vehicle-fixed manner in a vehicle, in particular a road vehicle, with at least one camera (17) for sequentially recording at least three images (44a, 44b, 44c), each with a representation of a detection area in front of the vehicle (12), and for generating image data corresponding to the images (44a, 44b, 44c), when the vehicle moves during the sequential recording of the at least three images, with a processing unit (22) for processing the image data, wherein the processing unit (22)

- determines in the first image (44a) a first representation of a stationary static object (32) and its image position (32a) in the first image (44a) as a first image position (32a),
- determines at least a second representation of the stationary static object (32) in the at least one second image (44b) and its image position (32b) in the second image (44b) as a second image position (32b),
- determines on the basis of the first image position (32a) and at least the second image position (32b) the course of a straight line (46) extending through the image positions (32, 32b),
- determines in the third image (44c) a third representation of the stationary static object (32) and its image position (32c) in the third image (44c) as a third image position (32c),
- and wherein the processing unit (22), determines on the basis of the distance (50) between the third image position (32c) and the determined straight line (46) the change in the pitch angle ($\Delta\alpha$) of the camera (17).

## Revendications

**1.** Procédé de détermination d'une modification de l'angle d'inclinaison longitudinale d'une caméra disposée de façon fixe dans un véhicule, notamment une voiture routière, ledit procédé comportant les étapes suivantes consistant à :

enregistrer séquentiellement au moins trois images (44a, 44b, 44c) comportant chacune une représentation d'une zone d'enregistrement en avant du véhicule (12) et à générer des données d'image correspondants aux images, le véhicule effectuant un mouvement de translation pendant l'enregistrement séquentiel des au moins trois images, et traiter les données d'image,

- en détectant dans la première image (44a) une première représentation d'un objet statique immobile (32) et sa position d'image (32a) dans la première image (44a) en tant que première position d'image (32a),
- en détectant au moins une deuxième représentation de l'objet statique immobile (32) dans l'au moins une deuxième image (44b) et sa position d'image (32b) dans la deuxième image (44b) en tant que deuxième position d'image (32b),
- en déterminant à partir de la première position d'image (32a) et au moins de la deuxième position d'image (32b) l'allure d'une droite (46) passant par les deux positions d'image,
- en détectant dans la troisième image (44c) une troisième représentation de l'objet statique immobile (32) et sa position d'image (32c) dans la troisième image (44c) en tant que troisième position d'image (32c),
- et en déterminant à partir de la distance (50) de la troisième position d'image (32c) à la droite déterminée (46) la variation de l'angle d'inclinaison longitudinale ($\Delta\alpha$) de la caméra (17).

**2.** Procédé selon la revendication 1, **caractérisé en ce que** après l'enregistrement de la deuxième image (44b) et avant l'enregistrement de la troisième image (44c) on enregistre au moins une quatrième image comportant une représentation d'une zone d'enregistrement en avant du véhicule (12) et on génère et on traite des données d'image correspondant à l'au moins une quatrième image, en détectant dans la quatrième image une quatrième représentation de l'objet immobile (32) et sa position d'image dans la quatrième image en tant que quatrième position d'image, et en déterminant à partir de la première position d'image (32a), de la deuxième position d'image (32b) et au moins de la quatrième position d'image l'allure de la droite (46).

**3.** Procédé selon l'une des revendications précédentes, **caractérisé en ce que** l'on détermine à partir de la première position d'image (32a), au moins de la deuxième position d'image (32b) et de la troisième position d'image (32c) une allure d'une nouvelle droite, **en ce que** après l'enregistrement de la troisième image (44c) on enregistre au moins une cinquième image comportant une représentation d'une zone d'enregistrement en avant du véhicule (12) et on génère et on traite des données d'image correspondant à au moins une cinquième image en détectant dans la cinquième image une cinquième représentation de l'objet immobile (32) et sa position d'image dans la cinquième image en tant que cinquième position d'image, et en déterminant à partir de la distance de la cinquième position d'image à la nouvelle droite déterminée la variation supplémentaire de l'angle d'inclinaison longitudinale (α) de la caméra (17).

4. Procédé selon l'une des revendications précédentes, **caractérisé en ce que** l'on détermine une allure de la droite (46, 60) proche des positions d'image déterminées (32a à 32c, 54a, 54b, 56a, 56b, 58a, 58b) et/ou **en ce que** la droite (46, 60) passe par au moins une position d'image déterminée (32a à 32c, 54a, 54b, 56a, 56b, 58a, 58b).

5. Procédé selon l'une des revendications précédentes, **caractérisé en ce que** la droite (46, 60) est déterminée à l'aide d'un vecteur de translation des positions d'image (32a à 32c, 54a, 54b, 56a, 56b, 58a, 58b) entre au moins deux images (44a, 44b, 44c, 52).

6. Procédé selon la revendication 5, **caractérisé en ce qu'**un vecteur de translation des positions d'image (32a à 32c, 54a, 54b, 56a, 56b, 58a, 58b) des représentations de l'objet (32) entre les images (44a, 44b, 44c, 52) est déterminé par au moins deux paires d'images comportant chacune deux images (44a, 44b, 44c, 52) enregistrées successivement, un vecteur de translation moyen étant déterminé à partir des vecteurs de translation déterminés, la première paire d'images comportant avantageusement la première image (44a) et la deuxième image (44b) et la deuxième paire d'images comportant avantageusement la deuxième image (44b) et une quatrième image enregistrée entre la deuxième image (44b) et la troisième image (44c).

7. Procédé selon l'une des revendications précédentes, **caractérisé en ce que** l'on détermine les représentations d'au moins deux objets immobiles (54, 56, 58) dans la première image (52) et chacune des autres images enregistrées et leurs positions d'image (54a, 54b, 56a, 56b, 58a, 58b) dans l'image correspondante, **en ce qu'**une structure des positions d'images (32a à 32c, 54a, 54b, 56a, 56b, 58a, 58b) dans l'image, se présentant avantageusement sous la forme d'une droite (60) ou d'une fonction, est à chaque fois déterminée en fonction des positions d'image (32a à 32c, 54a, 54b, 56a, 56b, 58a, 58b) des représentations des objets (54, 56, 58) dans l'image correspondante, **en ce que** au moins un vecteur de translation entre les allures des positions d'image (54a, 54b, 56a, 56b, 58a, 58b) est déterminée par au moins deux images et **en ce que** la droite (60) est déterminée à partir de l'au moins un vecteur de translation.

8. Procédé selon l'une des revendications précédentes, **caractérisé en ce que** la modification de l'angle d'inclinaison longitudinale (α) est déterminée à l'aide de la distance déterminée (50) de la troisième position d'image (32c) à la droite (46) en direction de l'axe y d'une matrice de points d'image x-y d'un capteur d'enregistrement d'image (64) de la caméra (17), l'axe x de la matrice de points d'image s'étendant parallèlement à l'axe y du système de coordonnées du véhicule ou en formant un angle préréglé par rapport à l'axe y du système de coordonnées du véhicule.

9. Procédé selon l'une des revendications précédentes, **caractérisé en ce que** la modification de l'angle d'inclinaison longitudinale (α) est calculée à partir de l'équation suivante :

$$\tan \Delta\alpha = a/b,$$

a étant la distance de la troisième position d'image (32c) à la droite (46),
b étant la distance du plan d'image au point principal côté image de l'optique de la caméra.

10. Procédé selon l'une des revendications précédentes, **caractérisé en ce que** l'on détermine l'angle de déviation du véhicule (12) entre l'enregistrement séquentiel d'au moins deux images (44a, 44b, 44c, 52) et, lors du traitement des données d'image, l'on tient compte de l'au moins une image (44a, 44b, 44c, 52), notamment **en ce qu'**une correction de la position d'image déterminée (32a à 32c, 54a, 54b, 56a, 56b, 58a, 58b) de la représentation de l'objet (32, 54, 56, 58) est effectuée à l'aide de l'angle de déviation déterminée.

11. Procédé selon l'une des revendications précédentes, **caractérisé en ce qu'**une diffusion lumineuse à régler d'au moins un phare avant (26) du véhicule (12) est déterminée à partir de la modification déterminée de l'angle d'inclinaison longitudinale (α) de la caméra (17) et/ou **en ce que** l'on détermine une valeur de correction pour corriger la diffusion lumineuse de l'au moins un phare avant (26) du véhicule (12).

12. Procédé selon l'une des revendications précédentes, **caractérisé en ce qu'**une caméra monoculaire, avantageusement une caméra noir et blanc destinée à enregistrer des images à échelle de gris, est utilisé pour enregistrer les images (44a, 44b, 44c, 52).

13. Procédé selon l'une des revendications précédentes, **caractérisé en ce que** l'objet immobile (32, 54, 56, 58) est une source lumineuse immobile, notamment une source lumineuse d'un éclairage de rue, une source lumineuse d'une installation de signalisation, une source lumineuse d'un éclairage de panneau de signalisation, un objet immobile illuminé par une source lumineuse immobile et au moins une partie de la lumière de la source lumineuse est un panneau de signalisation ou un dispositif de contrôle de trafic.

14. Procédé selon la revendication 13, **caractérisé en ce que** l'on détermine si la source lumineuse présente des variations de luminosité dues à une alimentation en énergie par un réseau d'alimentation en énergie à une fréquence de réseau de 50 Hz ou 60 Hz, et **en ce que** la source lumineuse est classée comme objet immobile (32, 54, 56, 58) avantageusement en tenant compte d'autres caractéristiques de classification.

15. Dispositif de détermination d'une modification de l'angle d'inclinaison longitudinale d'une caméra disposée fixe dans un véhicule, notamment un véhicule routier, ledit dispositif comportant au moins une caméra (17) destinée à enregistrer séquentiellement au moins trois images (44a, 44b, 44c) comportant chacune une représentation d'une zone d'enregistrement en avant du véhicule (12) et à générer des données d'image correspondant aux images (44a, 44b, 44c), lorsqu'un véhicule se déplace pendant l'enregistrement séquentiel des au moins trois images,
une unité de traitement (22) destiné à traiter des données d'images, l'unité de traitement (22) déterminant

    - comme première position d'image (32) une première représentation d'un objet statique immobile (32) dans la première image (44a) et sa position d'image (32a) dans la première image (44a),
    - comme deuxième position d'image (32b) au moins une deuxième représentation de l'objet statique immobile (32) dans l'au moins une deuxième image (44b) et sa position d'image (32b) dans la deuxième image (44b),
    - l'allure d'une droite (46) passant par les positions d'images (32, 32b) à partir de la première position d'image (32a) et au moins de la deuxième position d'image (32b),
    - comme troisième position d'image (32c) une troisième représentation de l'objet statique immobile (32) dans la troisième image (44c) et sa position d'image (32c) dans la troisième image (44c),
    - et l'unité de traitement (22) déterminant la modification de l'angle d'inclinaison longitudinale ($\Delta\alpha$) de la caméra (17) à partir de la distance (50) de la troisième position d'image (32c) à la droite déterminée (46).

FIG. 1

**FIG. 2**

EP 2 204 771 B1

**FIG. 3**

EP 2 204 771 B1

44a

32

32a

34

14

**FIG. 4**

**FIG. 5**

EP 2 204 771 B1

FIG. 6

EP 2 204 771 B1

EP 2 204 771 B1

**FIG. 7**

**FIG. 8**

EP 2 204 771 B1

FIG. 9

EP 2 204 771 B1

FIG. 10

EP 2 204 771 B1

**FIG. 11**

FIG. 12

f :   Brennweite

F:   Brennpunkt

g:   Gegenstandsweite

G:   Gegenstandsgrösse

b:   Bildweite

B:   Bildgrösse

d:   Durchmesser der wirksamen Oeffnung

k:   Blendenzahl = f/d

m:   Abbildungsmaßstab = B/G

EP 2 204 771 B1

**FIG. 13**

EP 2 204 771 B1

**EP 2 204 771 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050102083 A1
- EP 143725 A1
- DE 102007041781 A1
- EP 642950 B1
- WO 20060069978 A2

**In der Beschreibung aufgeführte Nicht-Patentliteratur**

- **COHN T E et al.** Pseudoreal-Time Activity Detection for Railroad Grade-Crossing Safety. *IEEE TRANSACTIONS ON INTELLIGENT TRANSPORTATION SYSTEMS,* 01. Dezember 2004, vol. 5 (4), ISSN 1524-9050, 319-324
- **VAN LEEUWEN M B et al.** Motion estimation with a mobile camera for traffic applications. *INTELLIGENT VEHICLES SYMPOSIUM, 2000. IV 2000. PROCEEDINGS OF THE IEEE DEARBORN,* 03. Oktober 2000, ISBN 978-0-7803-6363-2, 58-63